(19) Europäisches Patentamt European Patent Office Office européen des brevets

(11) **EP 4 696 920 A1**

(12) **EUROPEAN PATENT APPLICATION**
published in accordance with Art. 153(4) EPC

(43) Date of publication:
**18.02.2026 Bulletin 2026/08**

(21) Application number: **24788389.5**

(22) Date of filing: **23.01.2024**

(51) International Patent Classification (IPC):
*F16L 55/00* (2006.01)   *E04D 13/08* (2006.01)

(52) Cooperative Patent Classification (CPC):
**E04D 13/08; F16L 55/00**

(86) International application number:
**PCT/JP2024/001851**

(87) International publication number:
**WO 2024/214359 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 JP 2023064297**

(71) Applicant: **Panasonic Intellectual Property
Management Co., Ltd.
Kadoma-shi, Osaka 571-0057 (JP)**

(72) Inventors:
• **HASHIMOTO, Masayuki
  Kadoma-shi, Osaka 571-0057 (JP)**
• **NISHIMOTO, Mai
  Kadoma-shi, Osaka 571-0057 (JP)**
• **HORIO, Hideaki
  Kadoma-shi, Osaka 571-0057 (JP)**

(74) Representative: **Appelt, Christian W.
Boehmert & Boehmert
Anwaltspartnerschaft mbB
Pettenkoferstrasse 22
80336 München (DE)**

(54) **PROJECTION MEMBER, PIPING MEMBER, AND PIPING SYSTEM**

(57)   Provided are a protruding member, a piping member, and a piping system which can improve the flow rate while downsizing. A protruding member (6-1) is disposed inside a straight pipe (vertical pipe 3) disposed on a downstream side of a bend (5-1) for changing a direction of a flow channel, to partially reduce a flow channel cross-sectional area of the straight pipe (vertical pipe 3), and includes: a top (6c) positioned between a first end (6a) facing upstream and a second end (6b) facing downstream to minimize the flow channel cross-sectional area of the straight pipe (vertical pipe 3); and a projection (6h) that protrudes from a region between the top (6c) and the second end (6b) toward a center of the straight pipe (vertical pipe 3) as viewed along a direction of a center axis (C3) of the straight pipe (vertical pipe 3) but does not protrude beyond the top (6c).

Fig. 5

**Description**

TECHNICAL FIELD

The present disclosure relates to protruding members, piping members, and piping systems.

BACKGROUND ART

Patent Document 1 discloses a siphon rain gutter system. The siphon rain gutter system disclosed in Patent Document 1 includes: an eaves gutter; a siphon generating portion which includes a cylindrical portion that penetrates a water inlet formed in a bottom surface of the eaves gutter and is provided for causing a siphon phenomenon; and an elbow. The elbow is disposed on the downstream side of the siphon rain gutter system. The elbow includes a curved pipe section and socket portions provided at both ends of the curved pipe section. In a cross-sectional view in a plane containing the axis of the curved pipe section, the radius of curvature of the inner circumferential surface on the inner circumferential side of the curved pipe section is greater than 64 mm and less than 100 mm.

PRIOR ART DOCUMENTS

PATENT DOCUMENTS

Patent Document 1: JP 2019-120068 A

SUMMARY OF THE INVENTION

PROBLEMS TO BE SOLVED BY THE INVENTION

According to the techniques disclosed in patent document 1, improvement in the flow rate can be expected; however the elbow becomes relatively large.
The present disclosure provides a protruding member, a piping member, and a piping system which can improve the flow rate while downsizing.

SOLUTIONS TO THE PROBLEMS

A protruding member according to one aspect of the present disclosure is a protruding member disposed inside a straight pipe disposed on a downstream side of a bend for changing a direction of a flow channel to partially reduce a flow channel cross-sectional area of the straight pipe, and includes: a top positioned between a first end facing upstream and a second end facing downstream to minimize the flow channel cross-sectional area of the straight pipe; and a projection that protrudes from a region between the top and the second end toward a center of the straight pipe as viewed along a direction of a center axis of the straight pipe but does not protrude beyond the top.
A piping member according to one aspect of the present disclosure includes: the protruding member; and the straight pipe.
A piping system according to one aspect of the present disclosure includes: a vertical pipe fixed to a wall surface of a building; a horizontal pipe positioned between a water inlet for rainwater from the building and the vertical pipe; a first bend positioned between the horizontal pipe and the vertical pipe; a second bend positioned between the water inlet and the horizontal pipe; and at least one protruding member. The at least one protruding member is disposed on at least portion of the horizontal pipe or the vertical pipe as the straight pipe.

EFFECTS OF THE INVENTION

Aspects of the present disclosure enable improving the flow rate while downsizing.

BRIEF DESCRIPTION OF THE DRAWINGS

Fig. 1 is a schematic view of a piping system according to Embodiment 1.

Fig. 2 is a perspective view of a piping member of the piping system according to Embodiment 1.

Fig. 3 is an exploded perspective view of the piping member according to Embodiment 1.

Fig. 4 is a cross-sectional view of the piping member according to Embodiment 1.

Fig. 5 is an enlarged view of P1 in Fig. 4.

Fig. 6 is a cross-sectional view along line A-A in Fig. 4.

Fig. 7 is a cross-sectional view of a portion of the piping member according to Embodiment 1, with a part cut away.

Fig. 8 is a plan view of the piping member according to Embodiment 1.

Fig. 9 is a bottom view of the piping member according to Embodiment 1.

Fig. 10 is a cross-sectional view along line IX-IX in Fig. 6.

Fig. 11 is a cross-sectional view along line X-X in Fig. 6.

Fig. 12 is a cross-sectional view along line XI-XI in Fig. 6.

Fig. 13 is a cross-sectional view along line XII-XII in Fig. 6.

Fig. 14 is a cross-sectional view along line XIII-XIII in Fig. 6.

Fig. 15 is a diagram showing the pressure distribution simulation of the piping member in the comparative example.

Fig. 16 is a schematic view of a piping system according to Embodiment 2.

Fig. 17 is a perspective view of a piping member of the piping system according to Embodiment 2.

Fig. 18 is an exploded perspective view of the piping member according to Embodiment 2.

Fig. 19 is a cross-sectional view of the piping member according to Embodiment 2.

Fig. 20 is an enlarged view of P2 in Fig. 19.

Fig. 21 is a cross-sectional view along line B-B in Fig. 19.

Fig. 22 is a cross-sectional view of a portion of the piping member according to Embodiment 2, with a part cut away.

Fig. 23 is a plan view of the piping member according to Embodiment 2.

Fig. 24 is a bottom view of the piping member according to Embodiment 2.

Fig. 25 is a comparative diagram of the protruding member according Embodiment 2 and the protruding member according to Embodiment 1.

Fig. 26 is a graph showing the change in pressure loss caused by the protruding member of Embodiment 2 relative to the protruding member of Embodiment 1.

DETAILED DESCRIPTION

[1. EMBODIMENTS]

Below, embodiments will be described in detail with reference to the drawings as appropriate. However, unnecessarily detailed descriptions may be omitted. For example, detailed explanations of well-known matters or redundant descriptions of substantially identical components may be omitted. This is to avoid unnecessarily redundant explanations and to facilitate understanding by those skilled in the art. It should be noted that the inventor(s) provide the accompanying drawings and the following descriptions to ensure that those skilled in the art can sufficiently understand this disclosure, and it is not intended to limit the subject matter set forth in the claims by these descriptions or drawings.

Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

Note that, in the following description, if it is necessary to distinguish a plurality of components from each other, suffixes, such as, "-1", "-2", or the like are attached to reference signs of such components. if there is no need to distinguish such components from each other, such suffixes, such as, "-1", "-2", or the like, may be omitted in consideration of readability of texts.

[1.1 EMBODIMENT 1]

[1.1.1 CONFIGURATIONS]

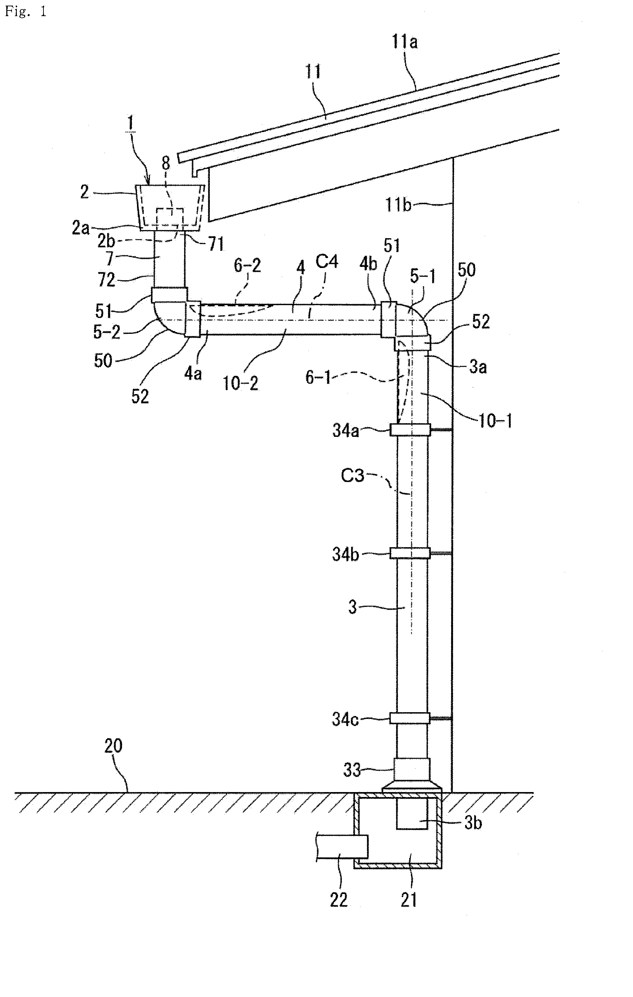

Fig. 1 is a schematic view of a piping system according to Embodiment 1. The piping system 1 is used as a drainage system. The piping system 1 is a rain gutter system that receives rainwater from a roof 11a of a building 11 and directs it to a sump portion 21 on a ground 20. The piping system 1 constitutes a flow channel for rainwater. Rainwater collected in the sump portion 21 flows from the sump portion 21 through an underground pipe 22 to a rainwater pipe. The building 11 is, for example, a non-residential facility such as a shop, office, factory, office building, school, welfare facility, or hospital, as well as a residential facility such as a detached house, apartment building, or individual units thereof. Non-residential facilities also include theaters, cinemas, public halls, amusement facilities, complex facilities, department stores, hotels, inns, kindergartens, libraries, museums, art galleries, underground malls, stations, and airports.

The piping system 1 includes an eaves gutter 2, a vertical pipe 3, a horizontal pipe 4, bends 5-1, 5-2, protruding members 6-1, 6-2, a vertical pipe 7, and a drain 8.

The eaves gutter 2 receives rainwater from the roof 11a of the building 11. The eaves gutter 2 is installed below the roof 11a of the building 11. As one example, the eaves gutter 2 is disposed at an eaves edge of the roof 11a. Specifically, the eaves gutter 2 is disposed to extend along the eaves edge of the roof 11a. The eaves gutter 2 has a long, trough-like shape. The eaves gutter 2 includes a bottom wall 2a. A water inlet 2b is formed in the bottom wall 2a according to the overall design of the piping system 1. The water inlet 2b is, for example, a circular opening. The water inlet 2b is also referred to as a drain outlet or drop outlet. As one example, the eaves gutter 2 may be formed by extrusion molding of a resin material. The eaves gutter 2 may be provided with a core material for reinforcing the overall strength of the eaves gutter 2. The core material may be made of metal, for example. Alternatively, the eaves gutter 2 may be formed from a metal plate, such as a steel plate (sometimes referred to as a coil).

The drain 8 is disposed at the water inlet 2b of the eaves gutter 2. The drain 8 reduces vortex generation and air entrainment at the water inlet 2b. The drain 8 can contribute to the generation of the siphon effect. The drain 8 may have a well-known configuration.

The vertical pipe 3 defines a flow channel in the vertical direction. In the rain gutter system, the vertical pipe 3 is also referred to as a downspout. The vertical pipe 3 is installed to drain rainwater from the water inlet 2b. The vertical pipe 3 vertically conveys rainwater from the water inlet 2b. The vertical pipe 3 has a straight pipe shape. A cross section taken perpendicular to a central axis C3 of the vertical pipe 3 is circular. The vertical pipe 3 is disposed so that a direction of the central axis C3 of the vertical pipe 3 is aligned to the upward and downward direction (the vertical direction). In Fig. 1, the vertical pipe 3 is fixed to a wall surface 11b of the building 11 by brackets 35a, 35b, and 35c. The vertical pipe 3 has an upstream end 3a and a downstream end 3b. The upstream end 3a is an end of the vertical pipe 3 that is connected to the water inlet 2b (the upper end in Fig. 1). The downstream end 3b is an end of the vertical pipe 3 that is inserted into the sump portion 21 (the lower end in Fig. 1). In Fig. 1, a drainpipe cover 34 is disposed to prevent rainwater from entering the sump portion 21 through a gap between the vertical pipe 3 and the sump portion 21. As one example, the material of the vertical pipe 3 is unplasticized poly(vinyl chloride). The dimensions of the vertical pipe 3, for example, the outer shape and thickness, may be set in accordance with JIS K 6741 "Unplasticized poly(vinyl chloride) (PVC-U) pipes."

The building 11 has a relatively long eaves. In the building 11, if the vertical pipe 3 is directly connected to the water inlet 2b, the distance between the vertical pipe 3 and the wall surface 11b of the building 11 may be large, and the installation standards for the vertical pipe 3 may not be met. In the piping system 1, the vertical pipe 3 is not directly connected to the water inlet 2b, but is connected via the horizontal pipe 4 and the bends 5-1, 5-2. The piping system 1 is, rather, a structure suitable for buildings 11 with a long eaves.

The horizontal pipe 4 defines a flow channel in a direction that intersects the vertical direction. In the rain gutter system, the horizontal pipe 4 is also referred to as a connecting pipe. The horizontal pipe 4 conveys rainwater from the building 11, from the water inlet 2b to the vertical pipe 3. The horizontal pipe 4 is positioned between the water inlet 2b receiving rainwater from the building 11 and the vertical pipe 3. The horizontal pipe 4 has a straight pipe shape. A cross section taken perpendicular to a central axis C4 of the horizontal pipe 4 is circular. The horizontal pipe 4 is fixed so that a direction of the central axis C4 of the horizontal pipe 4 is inclined with respect to the vertical direction (the upward and downward direction). The horizontal pipe 4 has an upstream end 4a and a downstream end 4b. The upstream end 4a is an end of the horizontal pipe 4 that is connected to the water inlet 2b (the left end in Fig. 1). The downstream end 4b is an end of the horizontal pipe 4 that is connected to the vertical pipe 3 (the right end in Fig. 1). As one example, the material of the horizontal pipe 4 is unplasticized poly(vinyl chloride). The dimensions of the horizontal pipe 4, such as the outer shape and thickness, may be set in accordance with JIS K 6741 "Unplasticized poly(vinyl chloride) (PVC-U) pipes."

The bends 5-1, 5-2 change the direction of the flow channel. The bends 5-1, 5-2 are connecting fittings that interconnect flow channels of differing directions, such as a vertical pipe and a horizontal pipe. Each of the bends 5-1, 5-2 includes socket portions 51, 52, to which upstream and downstream piping members are connected, respectively, and a bend portion 50 interconnecting the socket portions 51, 52. The angle between the central axes of the socket portions 51, 52 is, for example, 91.17°, as specified in JISK 6739 "Unplasticized poly(vinyl chloride) (PVC-U) pipe fittings for drain." As one example, the material of the bends 5-1, 5-2 is unplasticized poly(vinyl chloride). The dimensions of the bends 5-1, 5-2 may also be set according to JISK 6739 "Unplasticized poly(vinyl chloride) (PVC-U) pipe fittings for drain." The bends 5-1, 5-2 may be 90° elbow (so-called DL) as defined by JISK 6739.

The bend 5-1 is a first bend that interconnects the vertical pipe 3 and the horizontal pipe 4. The bend 5-1 connects the upstream end 3a of the vertical pipe 3 to the downstream end 4b of the horizontal pipe 4. In the bend 5-1, the downstream end 4b of the horizontal pipe 4 is connected to the socket portion 51, and the upstream end 3a of the vertical pipe 3 is connected to the socket portion 52. The bend 5-1 is not necessarily a member that directly connects the upstream end 3a of the vertical pipe 3 to the downstream end 4b of the horizontal pipe 4, but may be a member that indirectly connects the upstream end 3a of the vertical pipe 3 to the downstream end 4b of the horizontal pipe 4 via other members.

The bend 5-2 is a second bend that interconnects the water inlet 2b and the horizontal pipe 4. The bend 5-2 connects the upstream end 4a of the horizontal pipe 4 to the water inlet 2b. In the bend 5-2, the water inlet 2b is connected to the socket portion 51, and the upstream end 4a of the horizontal pipe 4 is connected to the socket portion 52. The bend 5-2 is not necessarily a member that directly connects the upstream end 4a of the horizontal pipe 4 to the water inlet 2b, but may be a member that indirectly connects the upstream end 4a of the horizontal pipe 4 to the water inlet 2b via other members.

The vertical pipe 7 defines a flow channel in the vertical direction. The vertical pipe 7 vertically conveys rainwater from the water inlet 2b. The vertical pipe 7 is connected to the drain 2c and is disposed downstream of the water inlet 2b. The vertical pipe 7 is interposed between the water inlet 2b and the bend 5-2. The vertical pipe 7 has a straight pipe shape. A cross section taken perpendicular to a central axis of the vertical pipe 7 is circular. The vertical pipe 7 is disposed so that a direction of the central axis of the vertical pipe 7 is aligned to the upward and downward direction (the vertical direction). The vertical pipe 7 has an upstream end 71 and a downstream end 72. The upstream end 71 is an end of the vertical pipe 7 that is connected to the water inlet 2b (the upper end in Fig. 1). The downstream end 72 is an end of the vertical pipe 7 that is connected to the socket portion 51 of the bend 5-2 (the lower end in Fig. 1). As one example, the material of the vertical pipe 7 is unplasticized poly(vinyl chloride). The dimensions of the vertical pipe 7, for example, the outer shape and thickness, may be set in accordance with JIS K 6741 "Unplasticized poly(vinyl chloride) (PVC-U) pipes."

The protruding members 6-1, 6-2 each are used to be disposed inside a straight pipe disposed on a downstream side of a bend for changing the direction of the flow channel to partially reduce the flow channel cross-sectional area of the straight pipe. In the piping system 1, the vertical pipe 3 is a straight pipe disposed on the downstream side of the bend 5-1 that changes the direction of the flow channel, and the horizontal pipe 4 is a straight pipe disposed on the downstream side of the bend 5-2 that changes the direction of the flow channel. The protruding member 6-1 is a first protruding member disposed inside at least part of the vertical pipe 3 as a straight pipe. In the present embodiment, at least part of the vertical pipe 3 is the entire vertical pipe 3. The protruding member 6-2 is a second protruding member disposed inside at least part of the horizontal pipe 4 as a straight pipe. In the present embodiment, at least part of the horizontal pipe 4 is the entire horizontal pipe 4.

The protruding members 6-1, 6-2, together with the vertical pipe 3 and the horizontal pipe 4 which are straight pipes where the protruding members 6-1, 6-2 are disposed, constitute piping members 10-1, 10-2, respectively. In the present embodiment, the piping member 10-1 including the protruding member 6-1 and the vertical pipe 3 is a first piping member, and the piping member 10-2 including the protruding member 6-2 and the horizontal pipe 4 is a second piping member.

The protruding members 6-1, 6-2 have the same configuration. Therefore, although the piping members 10-1, 10-2 differ in the vertical pipe 3 and horizontal pipe 4, they have substantially the same configuration. In the following, the piping member 10-1 will be mainly explained in detail. Those skilled in the art will readily understand that the explanation regarding the piping member 10-1 relating to the vertical pipe 3 can be interpreted as an explanation regarding the piping member 10-2 relating to the horizontal pipe 4.

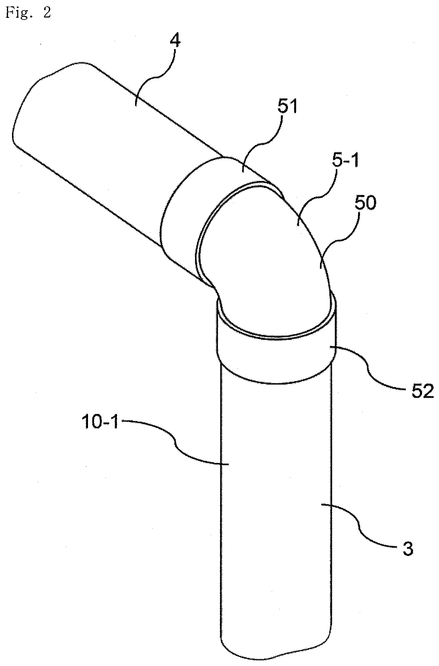

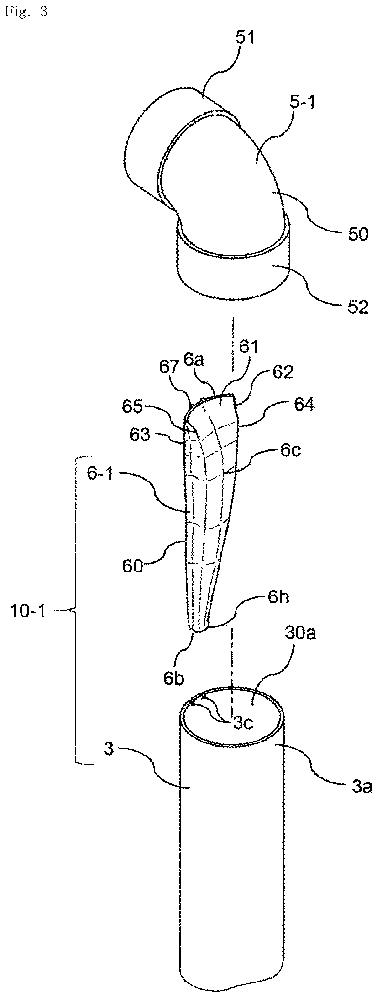

Fig. 2 is a perspective view of an example configuration of the piping member 10-1, and Fig. 3 is an exploded perspective view of the piping member 10-1. As can be understood from Figs. 2 and 3, the piping member 10-1 includes the vertical pipe 3 and the protruding member 6-1.

As shown in Fig. 3, the protruding member 6-1 has a size, i.e., length, width, and height (thickness), that allows it to be disposed inside the vertical pipe 3. The material of the protruding member 6-1 is, for example, unplasticized poly(vinyl chloride).

The protruding member 6-1 has a first end 6a and a second end 6b. The first end 6a and the second end 6b are opposite ends in the length direction of the protruding member 6-1. The length direction of the protruding member 6-1 coincides with the direction of the central axis C3 of the vertical pipe 3. The first end 6a faces upstream, and the second end 6b faces downstream. In the protruding member 6-1, fluid flows from the first end 6a to the second end 6b.

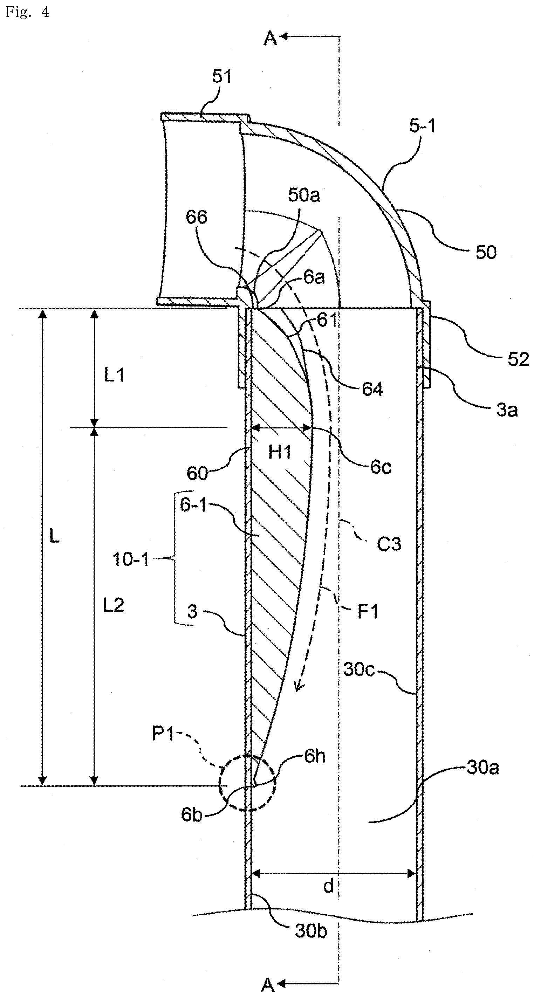

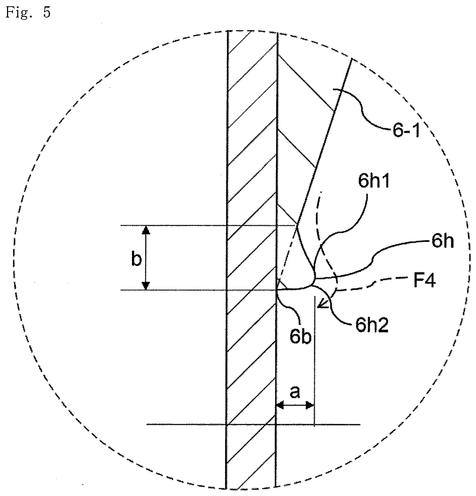

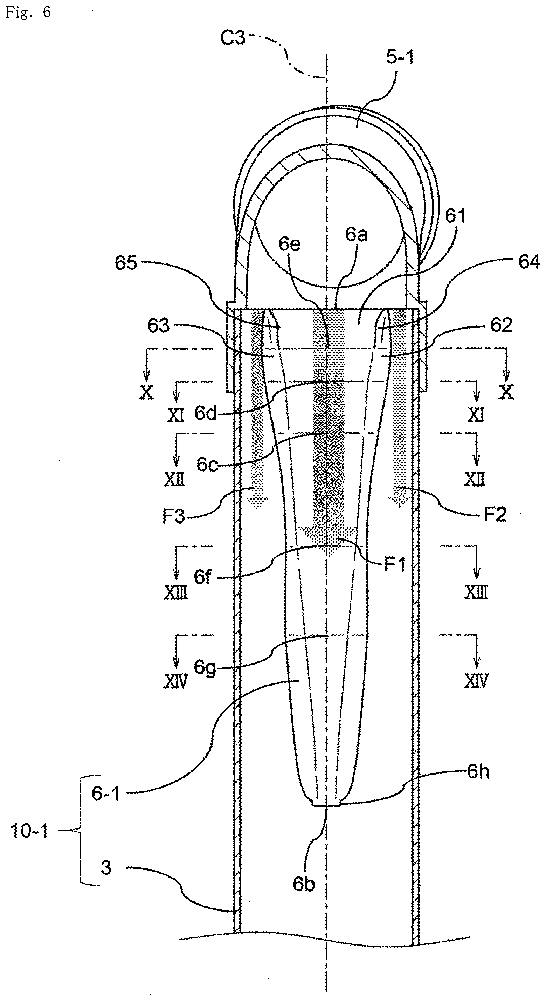

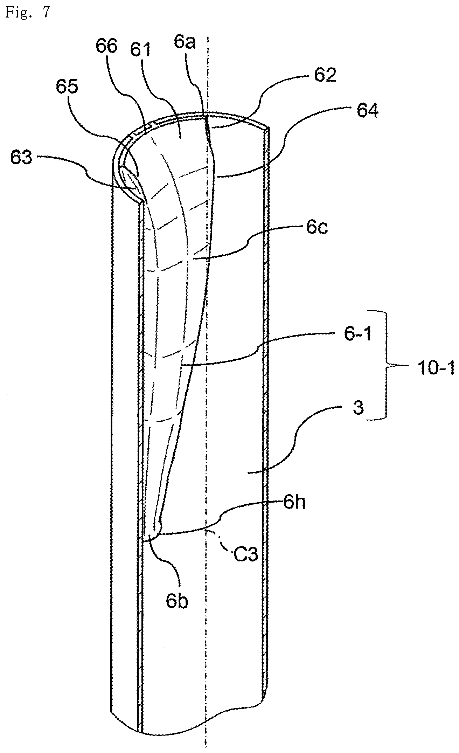

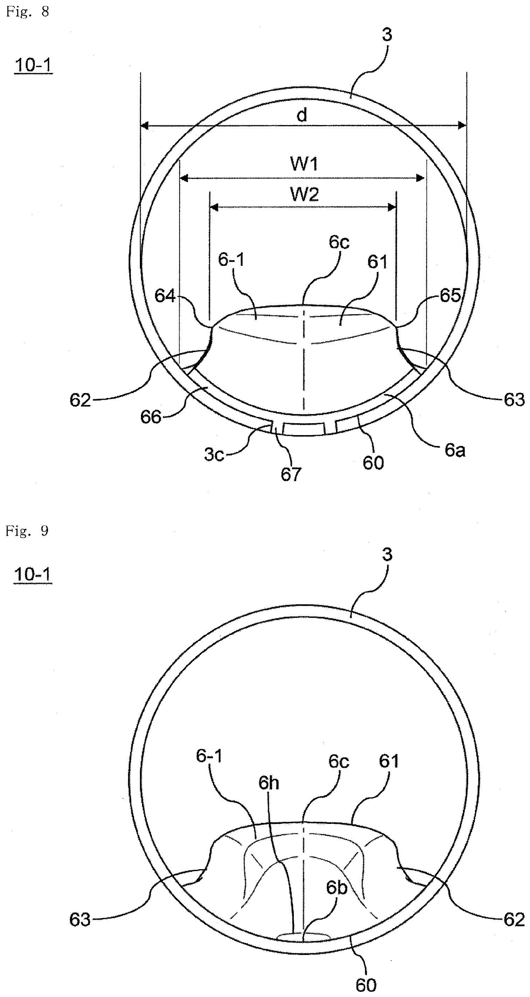

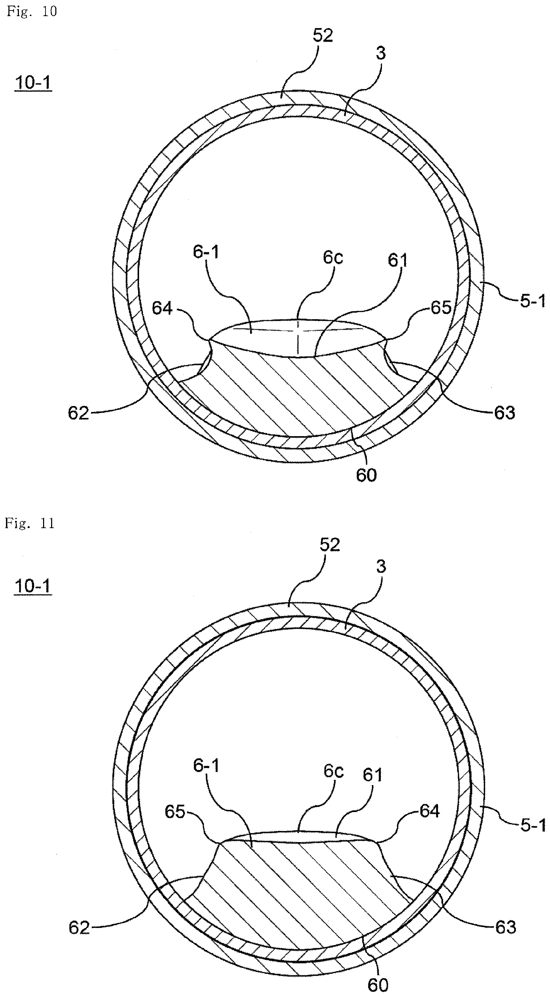

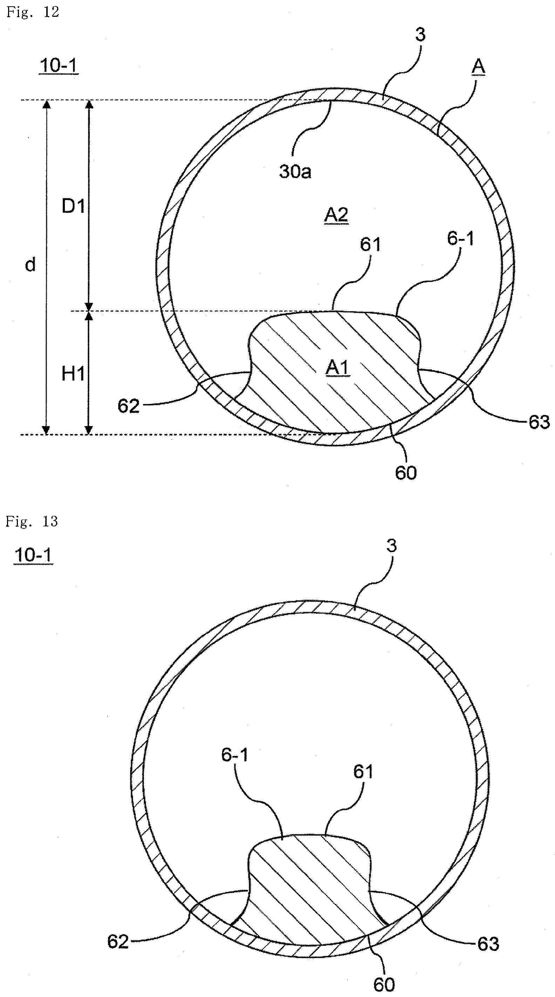

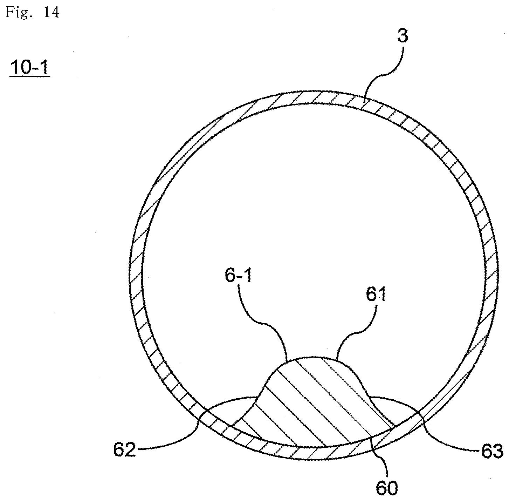

Fig. 4 is a cross-sectional view of the piping member 10-1. Fig. 5 is an enlarged view of P1 in Fig. 4. Fig. 6 is a cross-sectional view along line A-A in Fig. 4. Fig. 7 is a cross-sectional view with a part of the piping member 10-1 cut away. Fig. 8 is a plan view of the piping member 10-1. Fig. 9 is a bottom view of the piping member 10-1. Fig. 10 is a cross-sectional view along line IX-IX in Fig. 6. Fig. 11 is a cross-sectional view along line X-X in Fig. 6. Fig. 12 is a cross-sectional view along line XI-XI in Fig. 6. Fig. 13 is a cross-sectional view along line XII-XII in Fig. 6. Fig. 14 is a cross-sectional view along line XIII-XIII in Fig. 6.

As shown in Fig. 4, the protruding member 6-1 has a contact surface 60 that contacts an inner peripheral surface 30a of the vertical pipe 3. As shown in Figs. 8 and 9, the contact surface 60 is convex as viewed along the direction of the central axis C3 of the vertical pipe 3. The radius of curvature of the contact surface 60 is set based on the radius of curvature of the inner peripheral surface 30a so that no substantial gap is formed between the contact surface 60 and the inner peripheral surface 30a.

As shown in Figs. 4 and 6 through 9, the protruding member 6-1 has a main surface 61 and first and second side surfaces 62 and 63. The main surface 61 and the first and second side surfaces 62 and 63 are on the side opposite to the contact surface 60 in the protruding member 6-1, and can contact fluid flowing inside the vertical pipe 3. As shown in Figs. 4, 6, and 7, the main surface 61 extends from the first end 6a toward the second end 6b. As shown in Figs. 8 and 9, the main surface 61 faces the center of the vertical pipe 3 as viewed from the direction of the central axis C3 of the vertical pipe 3. The first side surface 62 and second side surface 63 are positioned on both sides of the main surface 61 as viewed from the direction of the central axis C3 of the vertical pipe 3. In Fig. 8, the first side surface 62 is on the left side of the main surface 61, and the second side surface 63 is on the right side of the main surface 61.

In the protruding member 6-1, the main surface 61 and the first and second side surfaces 62 and 63 can contact the fluid flowing inside the vertical pipe 3. As shown in Fig. 6, the protruding member 6-1 causes flow F1 along the main surface 61, flow F2 along the first side surface 62, and flow F3 along the second side surface 63. Since the main surface 61 and the first and second side surfaces 62 and 63 can contact the fluid, the surface roughness of the main surface 61 and the first and second side surfaces 62 and 63 is preferably small, since a lower surface roughness is expected to improve the flow rate.

The protruding member 6-1 includes a first separation wall 64 to promote separation of flow F1 and flow F2. The presence of the first separation wall 64 makes it easier to separate flow F2 from flow F1. The first separation wall 64 is positioned between the main surface 61 and the first side surface 62. In the present embodiment, the first separation wall 64 is the boundary portion between the main surface 61 and the first side surface 62. In other words, the boundary portion between the main surface 61 and the first side surface 62 forms a wall between a flow channel having the main surface 61 as its bottom and a flow channel having the first side surface 62 as its bottom. The first separation wall 64 can be formed because both the main surface 61 and the first side surface 62 have concave shapes.

The protruding member 6-1 includes a second separation wall 65 to promote separation of flow F1 and flow F3. The presence of the second separation wall 65 makes it easier to separate flow F3 from flow F1. The second separation wall 66 is positioned between the main surface 61 and the second side surface 63. In the present embodiment, the second separation wall 65 is the boundary portion between the main surface 61 and the second side surface 63. In other words, the boundary portion between the main surface 61 and the second side surface 62 forms a wall between a flow channel having the main surface 61 as its bottom and a flow channel having the second side surface 63 as its bottom. The second separation wall 65 can be formed because both the main surface 61 and the second side surface 63 have concave shapes.

As can be understood from Figs. 4, 6, and 8 through 14, as viewed along the direction of the central axis C3 of the vertical pipe 3, the shape (cross-sectional shape) of the protruding member 6-1 changes along the direction of the central axis C3 of the vertical pipe 3.

As shown in Fig. 4, the height of the protruding member 6-1 changes along the direction of the central axis C3 of the vertical pipe 3. In the present embodiment, the protruding member 6-1 includes a top 6c and a projection 6h.

The top 6c is positioned between the first end 6a and the second end 6b, and is the part of the protruding member 6-1 with the greatest height. The top 6c minimizes the cross-sectional area of the flow channel of vertical pipe 3.

The projection 6h extends from a region between the top 6c and the second end 6b toward the center of the vertical pipe 3 as viewed along the direction of the central axis C3 of the vertical pipe 3. In the present embodiment, the projection 6h is positioned at the second end 6b. The projection 6h does not protrude beyond the top 6c as viewed along the direction of the central axis C3 of the vertical pipe 3.

The height of the protruding member 6-1 increases monotonically from the first end 6a to the top 6c. The height of the protruding member 6-1 decreases monotonically from the top 6c to the second end 6b. In the present embodiment, the height of the protruding member 6-1 decreases from the top 6c to the projection 6h, and then varies according to the shape of the projection 6h. Excluding the projection 6h, the second end 6b has a tapered shape as viewed along the width direction of the protruding member 6-1. Excluding the projection 6h, the height of the protruding member 6-1 becomes zero at the second end 6b.

As shown in Fig. 4, in the cross section perpendicular to the width direction of the protruding member 6-1, the main surface 61 at the top 6c includes a curved surface protruding toward the second wall surface 30c. This enables improvement of flow rate. From another perspective, the main surface 61 may be shaped to protrude toward the second wall surface 30c on the downstream side of the bend 5-1 so as to cause the Coanda effect. That is, it is sufficient that the main surface 61 is shaped to cause the Coanda effect on the downstream side of the bend 5-1. This can improve flow rate while achieving downsizing.

Referring to Fig. 5, when the dimension of the projection 6h as viewed along the direction of the central axis C3 of the vertical pipe 3 is denoted by "a", and the inner diameter of the vertical pipe 3 is denoted by "d", $0.01d \leq a \leq 0.05d$. This enables improvement of flow rate. When the dimension of the projection 6h in the direction of the central axis C3 of the vertical pipe 3 is denoted by "b", and the inner diameter of the vertical pipe 3 is denoted by "d", $0.01d \leq b \leq 0.05d$. This also enables improvement of flow rate.

In Fig. 5, the shape of the protruding member 6-1 when the height of the protruding member 6-1 monotonically decreases from the top 6c toward the second end 6b (hereinafter referred to as the "basic shape") is indicated by a two-dot chain line. The dimensions "a" and "b" of the projection 6h may be set based on this basic shape. In the basic shape, the second end 6b of protruding member 6-1 has a tapered shape as viewed along the width direction, and at the second end 6b, the height of the protruding member 6-1 becomes zero. The dimension "a" may be the maximum projection amount from the basic shape, while the dimension "b" may be the distance between the upstream boundary between the basic shape and the projection 6h and the downstream boundary between the basic shape and the projection 6h.

In a cross-section perpendicular to the width direction of the protruding member 6-1, the projection 6h includes a curved surface protruding toward the second wall surface 30c, thereby improving flow rate. From another perspective, the projection 6h may be shaped to protrude toward the second wall surface 30c so as to cause the Coanda effect. Specifically, the projection 6h is preferably shaped to produce the Coanda effect on the downstream side of the top 6c. This can improve flow rate. Here, when radii of curvature of an upstream corner 6h1 and a downstream corner 6h2 of the projection 6h as viewed along the width direction of the protruding member 6-1 are denoted by "r", $r \leq a$ or $r \leq b$. Preferably, $r \leq a$ and $r \leq b$. Furthermore, the upstream corner 6h1 and the downstream corner 6h2 may have different radii of curvature.

As shown in Fig. 6, the projection 6h is positioned at the second end 6b. The projection 6h is formed across the entire width of the second end 6b.

As shown in Fig. 9, at least part of the projection 6h is convex as viewed along the direction of the central axis C3 of the vertical pipe 3. This may contribute to the reduction of pressure loss at the protruding member 6-1.

Referring to Fig. 4, the protruding member 6-1 induces flow along the protruding member 6-1, mainly, the flow F1 along the main surface 61. The protruding member 6-1 includes the projection 6h between the top 6c and the second end 6b. Referring to Fig. 5, the downstream side of the flow F1, flow F4 may occur along the projection 6h. As a result, the path of flow F1 may be extended compared to the case where the projection 6h is absent. This promotes the Coanda effect caused by the protruding member 6-1 and can improve flow rate. Furthermore, the projection 6h itself may cause the Coanda effect, making it easier to induce flow F4.

As can be understood from Figs. 8 to 14, the shape of the main surface 61 as viewed along the direction of the central axis C3 of the vertical pipe 3 changes along the direction of the central axis C3 of the vertical pipe 3.

From Figs. 8 and 10, at least part of the main surface 61 is concave as viewed along the direction of the central axis C3 of the vertical pipe 3. The at least part of the main surface 61 is a portion close to the first end 6a of the main surface 61. That is, at the first end 6a, the main surface 61 is concave. The radius of curvature of the at least part (the first end 6a) of the main surface 61 as viewed along the direction of the central axis C3 of the vertical pipe 3, is less than or equal to the radius of curvature of the inner peripheral surface 30a of the vertical pipe 3. This reduces pressure loss at the protruding member 6-1.

As shown in Figs. 8 to 12, although the main surface 61 is concave at the first end 6a, the main surface has a convex shape at the second end 6b. That is, the shape of the main surface 61 as viewed along the direction of the central axis C3 of the vertical pipe 3 transitions from a concave shape to a convex shape along a direction from the first end 6a to the second end 6b. This facilitates the occurrence of flow along the main surface 61 of the protruding member 6-1. In the present embodiment, as shown in Fig. 12, the main surface 61 is convex at the top 6c as viewed along the direction of the central axis C3 of the vertical pipe 3. The shape of a region from the top 6c to the second end 6b of the main surface 61 is convex as viewed along the direction of the central axis C3 of the vertical pipe 3. In the present embodiment, the protruding member 6-1 has a flat portion 6d between the first end 6a and the top 6c. As shown in Fig. 11, the flat portion 6d is planar as viewed along the direction of the central axis C3 of the vertical pipe 3.

In the area where the main surface 61 has a concave shape, the center of the concave shape of the main surface 61-that is, the lowest point of the concave shape-is located closer to the center than to the ends in the width direction of the protruding member 6-1. In the area where the main surface 61 has a convex shape, the center of the convex shape-that is, the highest point of the convex shape-is also closer to the center than to the ends in the width direction of the protruding member 6-1. In the present embodiment, the center of the convex shape of the main surface 61 coincides with the center of the protruding member 6-1 in the width direction.

As can be understood from Figs. 8 to 14, the shapes of the first side surface 62 and the second side surface 63 as viewed along the direction of the central axis C3 of the vertical pipe 3 change along the direction of the central axis C3 of the vertical pipe 3.

From Figs. 8 and 10, at least part of the first side surface 62 is concave as viewed along the direction of the central axis C3 of the vertical pipe 3. The at least part of the first side surface 62 is a portion close to the first end 6a of the first side surface 62. That is, at the first end 6a, the first side surface 62 is concave. This reduces pressure loss at the protruding member 6-1.

From Figs. 8 and 10, at least part of the second side surface 63 is concave as viewed along the direction of the central axis C3 of the vertical pipe 3. The at least part of the second side surface 63 is a portion close to the first end 6a of the second side surface 63. That is, at the first end 6a, the second side surface 63 is concave. This also reduces pressure loss at the protruding member 6-1.

As viewed along the direction of the central axis C3 of the vertical pipe 3, the shape of the first side surface 62 remains concave along a direction from the first end 6a to the second end 6b. As can be understood from Figs. 12 to 14, the depth of the concave shape becomes shallower in a direction from the top 6c toward the second end 6b. This allows flow F2 along the first side surface 62 to merge smoothly with flow F1 along the main surface 61 at the downstream side of the protruding member 6-1.

Similarly, as viewed along the direction of the central axis C3 of the vertical pipe 3, the shape of the second side surface 63 remains concave along a direction from the first end 6a to the second end 6b. As can be understood from Figs. 12 to 14, the depth of the concave shape becomes shallower along a direction from the top 6c toward the second end 6b. This allows flow F3 along the second side surface 63 to merge smoothly with flow F1 along the main surface 61 downstream in protruding member 6-1.

Referring to Fig. 6, the first side surface 62 and the second side surface 63 of the protruding member 6-1 are symmetrically shaped with respect to the center line of the protruding member 6-1 along the central axis C3 of the vertical pipe 3. This improves flow rate.

As shown in Fig. 6, the width of the protruding member 6-1 changes along the direction of the central axis C3 of the vertical pipe 3. The width of the protruding member 6-1 refers to the width at a portion closest to the inner peripheral surface 30a of the vertical pipe 3, of the protruding member 6-1. In the present embodiment, the width of the protruding member 6-1 corresponds to the width of the contact surface 60 of the protruding member 6-1. The protruding member 6-1 includes between the first end 6a and the second end 6b, a first portion 6e, a second portion 6f, and a third portion 6g where the direction of change in width varies. The first portion 6e is positioned between the first end 6a and the top 6c, more specifically, between the first end 6a and the flat portion 6d. The second portion 6f is positioned between the top 6c and the second end 6b. The third region 6g is positioned between the second portion 6f and the second end 6b. The width of the protruding member 6-1 increases monotonically from the first end 6a toward the first portion 6e. The width of the protruding member 6-1 decreases monotonically from the first portion 6e toward the second portion 6f. The width of the protruding member 6-1 increases monotonically from the second portion 6f toward the third portion 6g. The width of the protruding member 6-1 decreases monotonically from the third portion 6g toward the second end 6b. The width of the protruding member 6-1 reaches its maximum at the first portion 6e. As shown in Fig. 8, the maximum width of the protruding member 6-1 as viewed along the direction of the central axis C3 of the vertical pipe 3 (the width at the first portion 6e) is denoted by "W1". When the inner diameter of the vertical pipe 3 is denoted by "d", $0.5d \leq W1 \leq 0.9d$. When the maximum distance between the first separation wall 64 and the second separation wall 65 as viewed along the direction of the central axis C3 of the vertical pipe 3 is denoted by "W2", $0.3d \leq W2 \leq 0.7d$. $W2 \leq W1$.

The main surface 61 has a width that becomes narrower from the first end 6a toward the second end 6b, at least in a region extending from the first end 6a to the top 6c. This configuration enables the flows F2 and F3 along the first side surface 62 and the second side surface 63 to smoothly merge with the flow F1 along the main surface 61 on the downstream side of the protruding member 6-1. In the present embodiment, the width of the main surface 61 monotonically decreases from the first end 6a to the second end 6b.

The first side surface 62 includes a region where its width increases from the first end 6a toward the second end 6b. Specifically, the region close to the first end 6a of the first side surface 62 becomes wider from the first end 6a toward the second end 6b. This configuration can reduce pressure loss. In the present embodiment, the region close to the first end 6a of the first side surface 62 includes a region between the first end 6a and the flat portion 6d.

The second side surface 63 includes a region where its width increases from the first end 6a toward the second end 6b. Specifically, the region close to the first end 6a of the second side surface 63 becomes wider from the first end 6a toward the second end 6b. This configuration can reduce pressure loss. In the present embodiment, the region close to the first end 6a of the second side surface 63 includes a region between the first end 6a and the flat portion 6d.

The first separation wall 64 and the second separation wall 65 are formed only in part of the protruding member 6-1 along the direction of the central axis C3 of the vertical pipe 3, rather than over the entire length. More specifically, the first separation wall 64 and the second separation wall 65 are present within a predetermined range along the central axis C3 of the vertical pipe 3 from the first end 6a. The predetermined range is from the first end 6a to the flat portion 6d.

The distance between the first separation wall 64 and second separation wall 65 becomes shorter from the first end 6a toward the second end 6b. This configuration allows the flow F1 along the main surface 61 to be separated from the flows F2 and F3 along the first side surface 62 and the second side surface 63 on the upstream side of the protruding member 6-1, and allows the flows F2 and F3 along the first side surface 62 and the second side surface 63 to smoothly merge with the flow F1 along the main surface 61 on the downstream side of the protruding member 6-1.

Each of the first separation wall 64 and the second separation wall 65 has a height that decreases from the first end 6a toward the second end 6b. This configuration allows the flow F1 along the main surface 61 to be separated from the flows F2 and F3 along the first and second side surfaces 62 and 63 on the upstream side, and allows the flows F2 and F3 to smoothly merge with flow F1 downstream in protruding member 6-1.

Referring to Fig. 4 and Fig. 12, the diameter of the vertical pipe 3 is denoted by "d", and the distance between the first end 6a and the second end 6b along the direction of the central axis C3 of the vertical pipe 3 (i.e., the length of the protruding member 6-1) is denoted by "L". In the protruding member 6-1, it is preferable that $0.5d \leq L \leq 5.0d$. This can further reduce pressure losses caused by separation at the downstream side of the bend 5-1, thereby enabling improvement of the flow rate while downsizing.

Referring to Fig. 4, the top 6c of the protruding member 6-1 is the portion where the flow path cross-sectional area is minimized in the piping member 10-1. The distance between the first end 6a and the top 6c along the direction of the central axis C3 of the vertical pipe 3 is denoted by "L1". In the protruding member 6-1, it is preferable that $0.1L \leq L1 \leq 0.5L$. This can further reduce pressure losses caused by separation at the downstream side of the bend 5-1, thereby enabling improvement of the flow rate while downsizing.

Referring to Fig. 4, the distance between the top 6c and the second end 6b along the direction of the central axis C3 of the vertical pipe 3 is denoted by "L2". L2 satisfies L2 = L - L1. In the protruding member 6-1, it is preferable that L2 > L1. This can further reduce pressure losses caused by separation at the downstream side of the bend 5-1, thereby enabling improvement of the flow rate while downsizing.

Referring to Fig. 12, the distance from the top 6c of the protruding member 6-1 to the second wall surface 30c as viewed along the direction of the central axis C3 of the vertical pipe 3 is denoted by "D1". In the protruding member 6-1, it is preferable that $0.60d \leq D1 \leq 0.95d$. This can further reduce pressure losses caused by separation at the downstream side of the bend 5-1, thereby enabling improvement of the flow rate while downsizing.

The height at the top 6c of the protruding member 6-1 as viewed along the direction of the central axis C3 of the vertical pipe 3 is denoted by "H1". H1 satisfies H1 = d - D1. In the protruding member 6-1, it is preferable that $0.05d \leq H1 \leq 0.40d$. This can further reduce pressure losses caused by separation at the downstream side of the bend 5-1, thereby enabling improvement of the flow rate while downsizing.

The maximum flow channel cross-sectional area of the vertical pipe 3 is denoted by "A". The maximum flow channel cross-sectional area A is determined from the inner diameter "d" of the vertical pipe 3; namely, $A = \pi(d/2)^2$. The cross-sectional area of the protruding member at the top 6c is denoted by "A1". In the protruding member 6-1, it is preferable that $A1/A \leq 0.4$. This can further reduce pressure losses caused by separation at the downstream side of the bend 5-1, thereby enabling improvement of the flow rate while downsizing. The minimum flow channel cross-sectional area in the piping member 10-1 is denoted by "A2". A2 is the flow channel cross-sectional area at the top 6c of the protruding member 6-1. A2 satisfies A2 = A - A1. In the protruding member 6-1, it is preferable that $0.6 \leq A2/A < 1$. This can further reduce pressure losses caused by separation at the downstream side of the bend 5-1, thereby enabling improvement of the flow rate while downsizing.

As shown in Figs. 4, 7, and 8, the protruding member 6-1 has a contact end surface 66 at the first end 6a. In the present embodiment, the inner diameter of the vertical pipe 3 is larger than the inner diameter of the bent portion 50 of the bend 5-1. The contact end surface 66 is provided to fill the difference in inner diameter between the vertical pipe 3 and the bent portion 50 of the bend 5-1. As illustrated in Fig. 4, the presence of the contact end surface 66 allows the step between the inner peripheral wall surface 50a of the bent portion 50 of the bend 5-1 and the main surface 61 of the protruding member 6-1 to be reduced. This prevents obstruction of fluid flow from the bend 5-1 into the piping member 10-1.

As shown in Fig. 8, the protruding member 6-1 has a protruded part 67. The protruded part 67 is used for joining or positioning between the vertical pipe 3 and the protruding member 6-1 and is positioned on the contact surface 60. The protruded part 67 is shaped to fit into a recess 3c of the vertical pipe 3. In the present embodiment, the vertical pipe 3 has a pair of recesses 3c at the edge of the upstream end 3a. The recesses 3c are formed as cutouts. The protruding member 6-1 includes a pair of protruded parts 67, each fitting into one of the pair of recesses 3c. By fitting the pair of protruded parts 67 into the pair of recesses 3c, the protruding member 6-1 is positioned with respect to the vertical pipe 3.

In the piping member 10-1 described above, the protruding member 6-1 is disposed on the inner peripheral surface 30a of the vertical pipe 3. As a result, the flow channel cross-sectional area of the piping member 10-1 is not constant, and there exists a reduced area where the flow channel cross-sectional area of the piping member 10-1 is smaller than the cross-sectional area of the vertical pipe 3. The protruding member 6-1 is positioned closer to the upstream end 3a of the vertical pipe 3 than the downstream end 3b of the vertical pipe 3. In the present embodiment, the protruding member 6-1 is placed at the upstream end 3a of the vertical pipe 3. That is, the protruding member 6-1 reduces the flow channel at the upstream end 3a of the vertical pipe 3, which connects to the bend 5-1.

The protruding member 6-1 is disposed to protrude from a first wall surface 30b on the inner peripheral side of the vertical pipe 3 towards a second wall surface 30c on the outer peripheral side of the vertical pipe 3. The first wall surface 30b is a portion of the inner peripheral surface 30a corresponding to the inner peripheral side of the bend 5-1 (for example, a half portion on the inner peripheral side). The second wall surface 30c is a portion of the inner peripheral surface 30a corresponding to the outer peripheral side of the bend 5-1 (for example, a half portion on the outer peripheral side). The inner peripheral surface 30a is composed of the first wall surface 30b and the second wall surface 30c.

Next, the effect of the protruding member 6-1 in the piping member 10-1 will be explained. The protruding member 6-1 is disposed inside the vertical pipe 3 disposed on the downstream side of the bend 5-1. The bend 5-1 directs water that flows in from the horizontal pipe 4, to the vertical pipe 3. When the direction of the water flow changes significantly within the bend 5-1, pressure loss due to flow separation can contribute to a decline in flow rate.

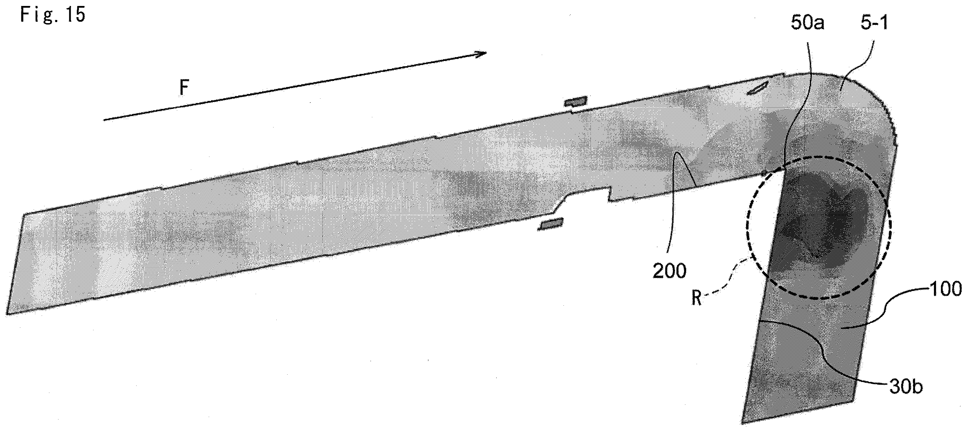

Fig. 15 is a diagram of a simulation of pressure distribution in a piping member 100 of a comparative example. The piping member 100 of the comparative example differs from the piping member 10-1 in that it does not have the protruding member 6-1. In Fig. 15, darker colors indicate lower pressures. In particular, in Fig. 15, an area indicated by R shows significant pressure loss, and the existence of such a region is a major factor in reducing flow rate. The pressure loss at the region indicated by R in Fig. 15 is believed to be caused by separation. This separation occurs when water separates from the first wall surface 30b of the piping member 100 at the downstream side of the inner peripheral wall surface 50a of the bend 5-1. That is, as shown by arrow F in Fig. 15, water flowing in from upstream initially travels along a pipe wall 200, but may separate from the first wall surface 30b of the piping member 100 after the inner peripheral wall surface 50a of the bend 5-1. Such separation is especially pronounced at higher water velocities, and faster flow tends to enlarge the area where pressure loss occurs.

In the present embodiment, the piping member 10-1 includes the protruding member 6-1. Due to the presence of the protruding member 6-1, (1) It can be expected that water will flow along the pipe wall more easily than in the case where the protruding member 6-1 is not provided, and (2) It can be expected to reduce the locations themselves where pressure loss may occur. Thus, the protruding member 6-1 reduces pressure loss due to separation at the downstream side of the bend 5-1 and can improve flow rate. The piping member 10-1, simply by including the protruding member 6-1, does not require an increase in the radius of curvature of the inner peripheral surface on the inner peripheral side of the bend 5-1 as in the technology described in Patent Document 1, thereby enabling downsizing. Accordingly, the protruding member 6-1 enables improvement of the flow rate while downsizing. Since the protruding member 6-1 is disposed inside the vertical pipe 3, it becomes inconspicuous when viewing the overall piping system 1, which can be expected to improve the overall appearance of the piping system 1.

Furthermore, the protruding member 6-1 includes the projection 6h at the region between the top 6c and the second end 6b. Compared to designs without the projection 6h, the path of flow (mainly F1) along the protruding member 6-1 can be extended. This promotes the Coanda effect by the protruding member 6-1 and can further improve flow rate. Moreover, the existence of the projection 6h allows for increased strength in the region between top 6c and second end 6b of the protruding member 6-1.

[1.1.2 ADVANTAGESOUS EFFECTS]

The aforementioned protruding member 6-1, 6-2 is disposed inside the straight pipe (the vertical pipe 3, the horizontal pipe 4) disposed on the downstream side of the bend 5-1, 5-2 for changing the direction of the flow channel to partially reduce the flow channel cross-sectional area of the straight pipe. The aforementioned protruding member 6-1, 6-2 includes the top 6c positioned between the first end 6a facing upstream and the second end 6b facing downstream to minimize the flow channel cross-sectional area of the straight pipe (the vertical pipe 3, the horizontal pipe 4), and the projection 6h that protrudes from the region between the top 6c and the second end 6b toward the center of the straight pipe (the vertical pipe 3, the horizontal pipe 4) viewed along the direction of the center axis C3 of the straight pipe (the vertical pipe 3, the horizontal pipe 4) but does not protrude beyond the top 6c. This configuration enables improving the flow rate while downsizing.

In the protruding member 6-1, 6-2, the projection 6h is positioned on the second end 6b. This configuration can reduce the possibility of damage at the second end 6b of the protruding member 6-1, 6-2.

In the protruding member 6-1, 6-2, when the dimension of the projection 6h a viewed along the direction of the central axis C3, C4 of the straight pipe (the vertical pipe 3, the horizontal pipe 4) is denoted by "a" and the inner diameter of the straight pipe (the vertical pipe 3, the horizontal pipe 4) is denoted by "d", $0.01d \leq a \leq 0.05d$. This configuration can improve the flow rate.

In the protruding member 6-1, 6-2, when the radius of curvature of the corner of the projection 6h as viewed along the width direction of the protruding member 6-1, 6-2 is denoted by "r", $r \leq a$. This configuration can improve the flow rate.

In the protruding member 6-1, 6-2, when the dimension of the protrusion 6h in the direction of the central axis C3, C4 of the straight pipe (the vertical pipe 3, the horizontal pipe 4) is denoted by "b" and the inner diameter of the straight pipe (the vertical pipe 3, the horizontal pipe 4) is denoted by "d", $0.01d \leq b \leq 0.05d$. This configuration can improve the flow rate.

In the protruding member 6-1, 6-2, when the radius of curvature of the corner of the projection 6h as viewed along the width direction of the protruding member 6-1, 6-2 is denoted by "r", $r \leq b$. This configuration can improve the flow rate.

In the protruding member 6-1, 6-2, when the distance between the first end 6a and the second end 6b in the direction of the center axis C3, C4 of the straight pipe (the vertical pipe 3, the horizontal pipe 4) is denoted by "L", and the distance between the first end and the top in the direction of the center axis of the straight pipe is denoted by "L1", $0.1L \leq L1 \leq 0.5L$. This configuration can improve the flow rate.

In the protruding member 6-1, 6-2, when the maximum flow channel cross-sectional area of the straight pipe (the vertical pipe 3, the horizontal pipe 4) is denoted by "A", and the cross-sectional area at the top 6c of the protruding member 6-1, 6-2 is denoted by "A1", $A1/A \leq 0.4$. This configuration can improve the flow rate.

In the protruding member 6-1, 6-2, the second end 6b has a tapered shape as viewed along the width direction of the protruding member 6-1, 6-2. This configuration can reduce the pressure loss between the second end 6b and the inner peripheral surface 30a of the straight pipe (the vertical pipe 3, the horizontal pipe 4). The flow rate can be improved.

In the protruding member 6-1, 6-2, when the inner diameter of the straight pipe (the vertical pipe 3, the horizontal pipe 4) is denoted by "d", and the distance between the first end 6a and the second end 6b in the direction of the center axis C3, C4 of the straight pipe (the vertical pipe 3, the horizontal pipe 4) is denoted by "L", $0.5d \leq L \leq 5.0d$. This configuration can improve the flow rate.

The aforementioned piping member 10-1, 10-2 includes the protruding member 6-1, 6-2, and the straight pipe (the vertical pipe 3, the horizontal pipe 4). This configuration enables improving the flow rate while downsizing.

The aforementioned piping system 1 includes: the vertical pipe 3 fixed to the wall surface 11b of the building 11; the horizontal pipe 4 positioned between the water inlet 2b for rainwater from the building 11 and the vertical pipe 3; the first bend 5-1 positioned between the horizontal pipe 4 and the vertical pipe 3; the second bend 5-2 positioned between the water inlet 2b and the horizontal pipe 4; and the protruding members 6-1, 6-2. The protruding member 6-1 is disposed inside at least portion of the vertical pipe 3 as the straight pipe. The protruding member 6-2 is disposed inside at least portion of the horizontal pipe 4 as the straight pipe. This configuration enables improving the flow rate while downsizing.

[1.2 EMBODIMENT 2]

[1.2.1 CONFIGURATIONS]

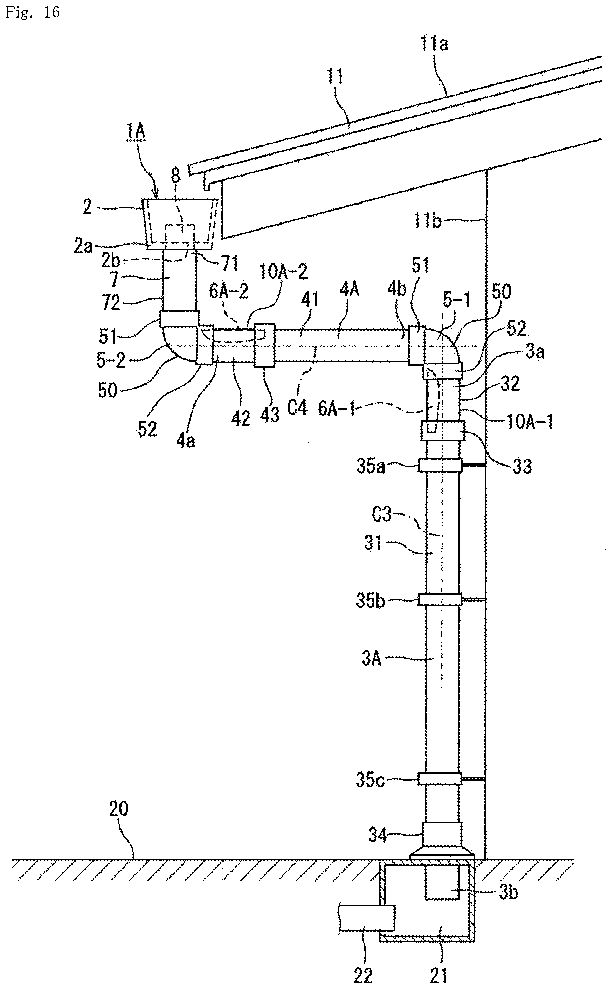

Fig. 16 is a schematic view of a piping system 1A according to Embodiment 2. The piping system 1A includes the eaves gutter 2, a vertical pipe 3A, a horizontal pipe 4A, the bends 5-1 and 5-2, protruding members 6A-1 and 6A-2, the vertical pipe 7, and the drain 8.

The vertical pipe 3A is composed of a plurality of piping parts. The vertical pipe 3A includes straight pipes 31, 32 and a connecting joint 33 that interconnects the straight pipes 31, 32. The straight pipe 31 is a downstream part of the vertical pipe 3A, and the straight pipe 32 is an upstream part of the vertical pipe 3A. In the present embodiment, the straight pipe 31 is longer than the straight pipe 32. A first end (upper end in Fig. 16) of the straight pipe 32 defines the upstream end 3a of the vertical pipe 3A, and a second end (lower end in Fig. 15) of the straight pipe 32 is connected via the connecting joint 33 to a first end (upper end in Fig. 16) of the straight pipe 31. A second end (lower end in Fig. 16) of the straight pipe 31 defines a downstream end 3b of the vertical pipe 3A. As an example, the materials of the straight pipes 31, 32 and the connecting joint 33 may be unplasticized poly(vinyl chloride). The dimensions (e.g., outer shape and thickness) of the straight pipes 31, 32 may be set in accordance with JIS K6741 "Unplasticized poly(vinyl chloride) (PVC-U) pipes." The dimensions (e.g., outer shape and thickness) of the connecting joint 33 may be set in accordance with the socket standard of JISK 6739 "Unplasticized poly(vinyl chloride) (PVC-U) pipe fittings for drain."

The horizontal pipe 4A is composed of a plurality of piping parts. The horizontal pipe 4A includes straight pipes 41 and 42 and a connecting joint 43 that interconnects the straight pipes 41 and 42. The straight pipe 41 is a downstream part of the horizontal pipe 4A, and the straight pipe 42 is an upstream part of the horizontal pipe 4A. In the present embodiment, the straight pipe 41 is longer than the straight pipe 42. A first end (left end in Fig. 16) of the straight pipe 42 defines the upstream end 4a of the horizontal pipe 4A, and a second end (right end in Fig. 16) of the straight pipe 42 is connected via the connecting joint 43 to a first end (left end in Fig. 16) of the straight pipe 41. A second end (right end in Fig. 16) of the straight pipe 41 defines the downstream end 4b of the horizontal pipe 4A. As an example, the materials of the straight pipes 41, 42 and the connecting joint 43 may be unplasticized poly(vinyl chloride). The dimensions (e.g., outer shape and thickness) of the straight pipes 41, 42 may be set in accordance with JIS K6741 "Unplasticized poly(vinyl chloride) (PVC-U) pipes." The

EP 4 696 920 A1

dimensions (e.g., outer shape and thickness) of the connecting joint 43 may be set in accordance with the socket standard of JISK 6739 "Unplasticized poly(vinyl chloride) (PVC-U) pipe fittings for drain."

The protruding members 6A-1, 6A-2 each are used to be disposed inside the straight pipe disposed on the downstream side of the bend for changing the direction of the flow channel to partially reduce the flow channel cross-sectional area of the straight pipe. In the piping system 1A, the straight pipe 32 of the vertical pipe 3A is disposed on the downstream side of the bend 5-1 for changing the direction of the flow channel, and the straight pipe 42 of the horizontal pipe 4A is disposed on the downstream side of the bend 5-2 for changing the direction of the flow channel. The protruding member 6A-1 is a first protruding member that is disposed inside at least portion of the vertical pipe 3A as a straight pipe. In the present embodiment, the at least portion of the vertical pipe 3A is the straight pipe 32. The protruding member 6A-2 is a second protruding member that is disposed inside at least portion of the horizontal pipe 4A as a straight pipe. In the present embodiment, the at least portion of the horizontal pipe 4A is the straight pipe 42.

The protruding members 6A-1, 6A-2, together with the straight pipes 32, 42 inside which the protruding members 6A-1, 6A-2 are disposed, constitute piping members 10A-1, 10A-2, respectively. In the present embodiment, the piping member 10A-1, which includes the protruding member 6A-1 and the straight pipe 32, is a first piping member. The piping member 10A-2, which includes the protruding member 6A-2 and the straight pipe 42, is a second piping member. In the present embodiment, since the piping member 10A-1 is composed of a part of the vertical pipe 3A (the straight pipe 32), unlike the piping member 10-1 that uses the entire vertical pipe 3, it is easier to transport than the piping member 10-1.

The protruding members 6A-1, 6A-2 have the same configuration. Therefore, although the piping member 10A-1 includes the straight pipe 32 of the vertical pipe 3A and the piping member 10A-2 includes the straight pipe 42 of the horizontal pipe 4A, they have substantially the same structure. In the following description, details will mainly be given for the piping member 10A-1. Those skilled in the art will readily understand that the description regarding the piping member 10A-1 also applies to the piping member 10A-2, by reading references to the vertical pipe 3A as references to the horizontal pipe 4A.

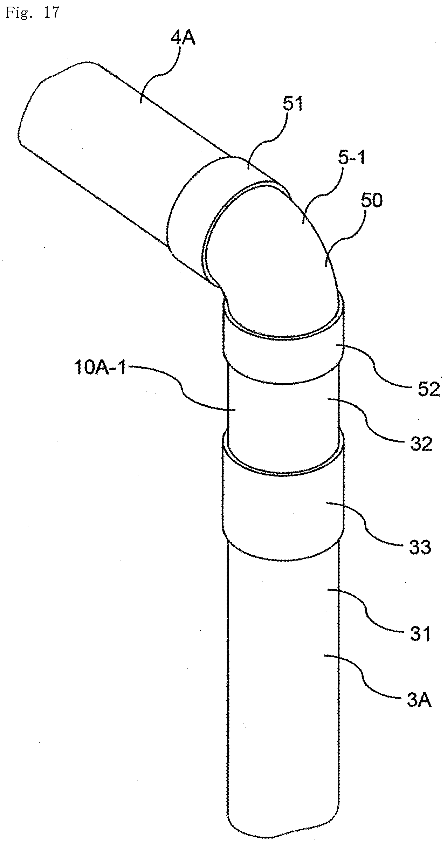

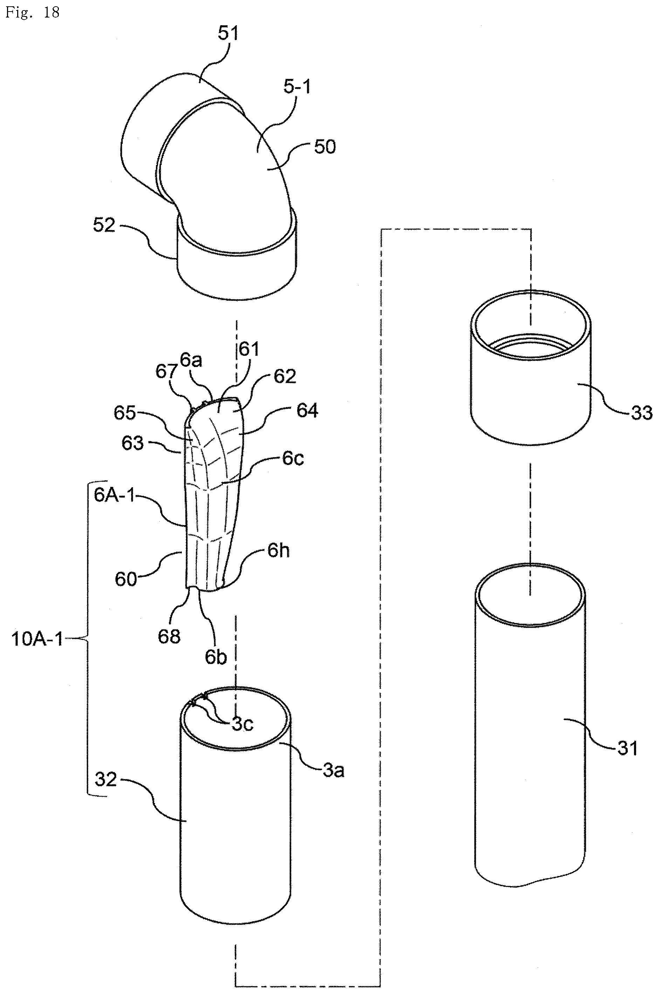

Fig. 17 is a perspective view of an example structure of the piping member 10A-1, and Fig. 18 is an exploded perspective view of the piping member 10A-1. As shown in Figs. 17 and 18, the piping member 10A-1 includes the straight pipe 32 of the vertical pipe 3A and the protruding member 6A-1.

As shown in Fig. 18, the protruding member 6A-1 has a size (i.e., length, width, and height (thickness)) that enables it to be disposed inside the straight pipe 32 of the vertical pipe 3A. The material of the protruding member 6A-1 is, for example, unplasticized poly(vinyl chloride).

The protruding member 6A-1 has a first end 6a and a second end 6b. The first end 6a and the second end 6b are opposite ends in the length direction of the protruding member 6A-1. The length direction of the protruding member 6A-1 coincides with the direction of the central axis C3 of the vertical pipe 3A. The first end 6a faces upstream, and the second end 6b faces downstream. In the protruding member 6A-1, fluid flows from the first end 6a toward the second end 6b.

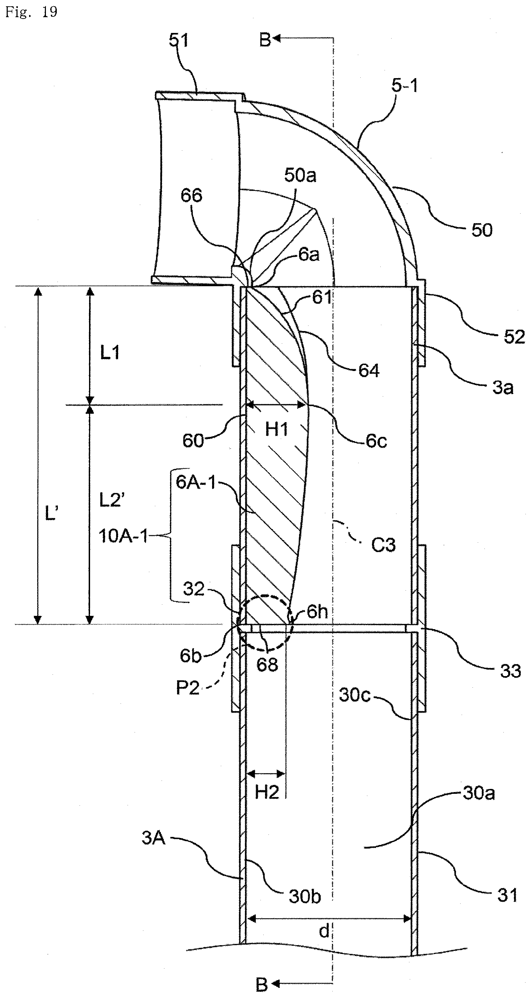

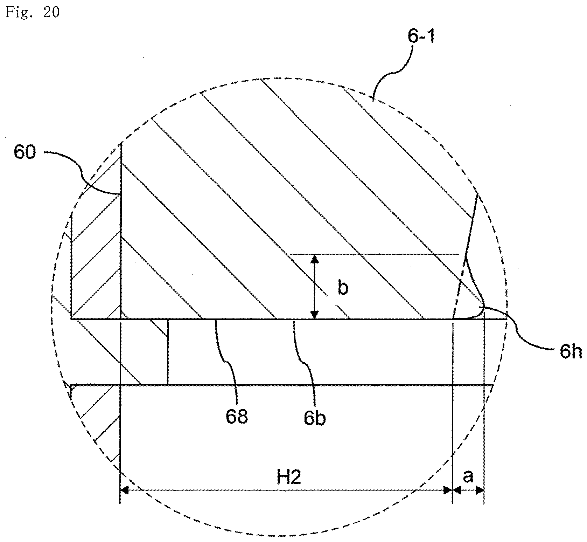

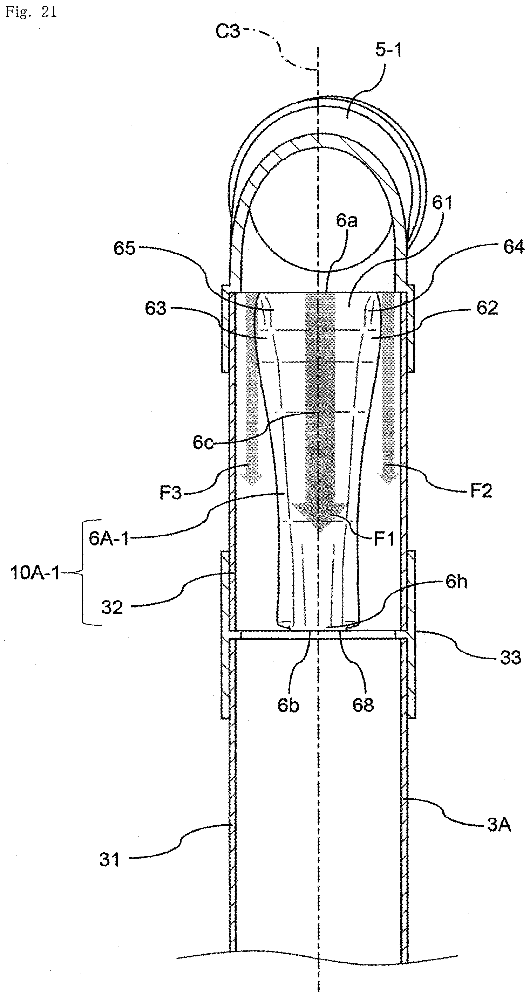

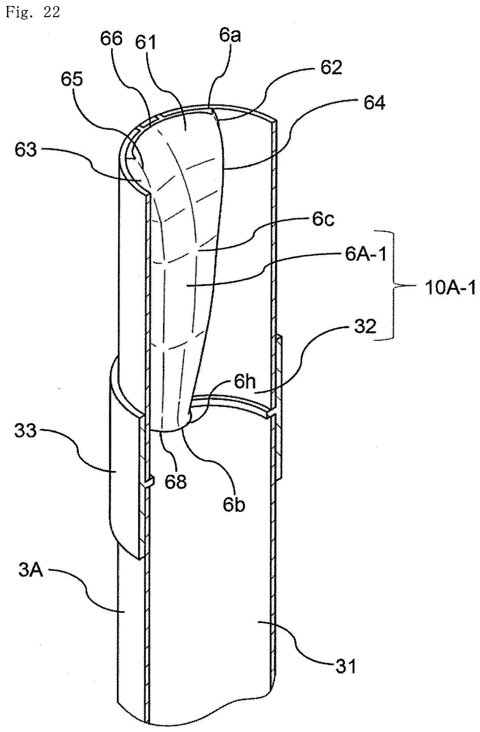

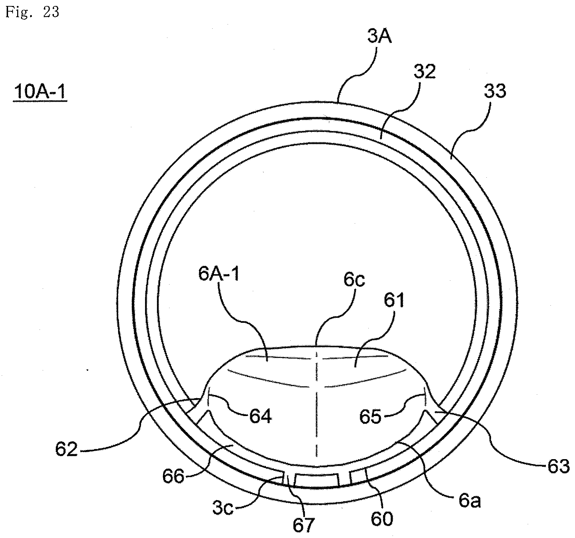

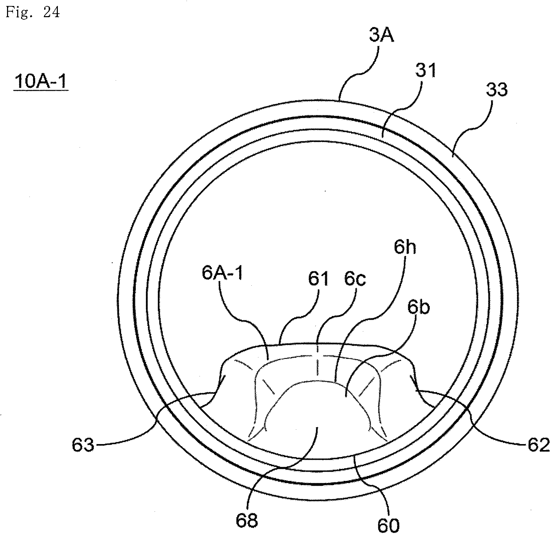

Fig. 19 is a sectional view of the piping member 10A-1. Fig. 20 is an enlarged view of P2 in Fig. 19. Fig. 21 is a sectional view taken along line B-B in Fig. 19. Fig. 22 is a sectional view of a portion of the piping member 10A-1 with a part cut away. Fig. 23 is a plan view of the piping member 10A-1. Fig. 24 is a bottom view of the piping member 10A-1.

As understood from Figs. 19 to 24, the protruding member 6A-1 has the same shape as the protruding member 6-1 at the first end 6a side. On the other hand, unlike the protruding member 6-1, the protruding member 6A-1 has an end surface 68 at the second end 6b. The end surface 68 intersects the central axis C3 of the vertical pipe 3A. In the present embodiment, the end surface 68 is orthogonal to the central axis C3 of the vertical pipe 3A.

Similar to the protruding member 6-1, the protruding member 6A-1 includes a top 6c and a projection 6h. The projection 6h extends, as viewed along the direction of the central axis C3 of the vertical pipe 3, toward the center of the vertical pipe 3 from a region between the top 6c and the second end 6b. In the present embodiment, the projection 6h is at the second end 6b.

With reference to Fig. 20, when the dimension of the projection 6h as viewed along the direction of the central axis C3 of the vertical pipe 3 is denoted by "a", and the inner diameter of the vertical pipe 3 is denoted by "d", then $0.01d \leq a \leq 0.05d$. This makes it possible to improve flow rate. When the dimension of the projection 6h in the direction of the central axis C3 of the vertical pipe 3 is denoted by "b", and the inner diameter of the vertical pipe 3 is denoted by "d", then $0.01d \leq b \leq 0.05d$. This also makes it possible to improve flow rate.

In Fig. 20, the shape of the protruding member 6A-1 in a case where the height of the protruding member 6A-1 monotonically decreases from the top 6c toward the second end 6b (hereinafter referred to as the "basic shape"), is shown by a two-dot chain line. The dimensions "a" and "b" of the projection 6h may be set based on this basic shape. The dimension "a" may be the maximum value of the projected amount from the basic shape. The dimension "b" may be the distance between the upstream boundary between the basic shape and the projection 6h and the downstream boundary between the basic shape and the projection 6h.

As shown in Fig. 19, the protruding member 6A-1 is housed within the straight pipe 32 in the direction of the central axis C3 of the vertical pipe 3A. In the present embodiment, the length of the protruding member 6A-1 (i.e., the distance between the first end 6a and the second end 6b) is equal to the length of the straight pipe 32. That is, in the piping member 10A-1, the entirety of the protruding member 6A-1 is contained within the straight pipe 32. As a result, the protruding member 6A-1 can be protected by the straight pipe 32, compared to a case where a part of the protruding member 6A-1 protrudes outward from the straight pipe 32. Accordingly, the possibility of damage to the protruding member 6A-1 can be reduced.

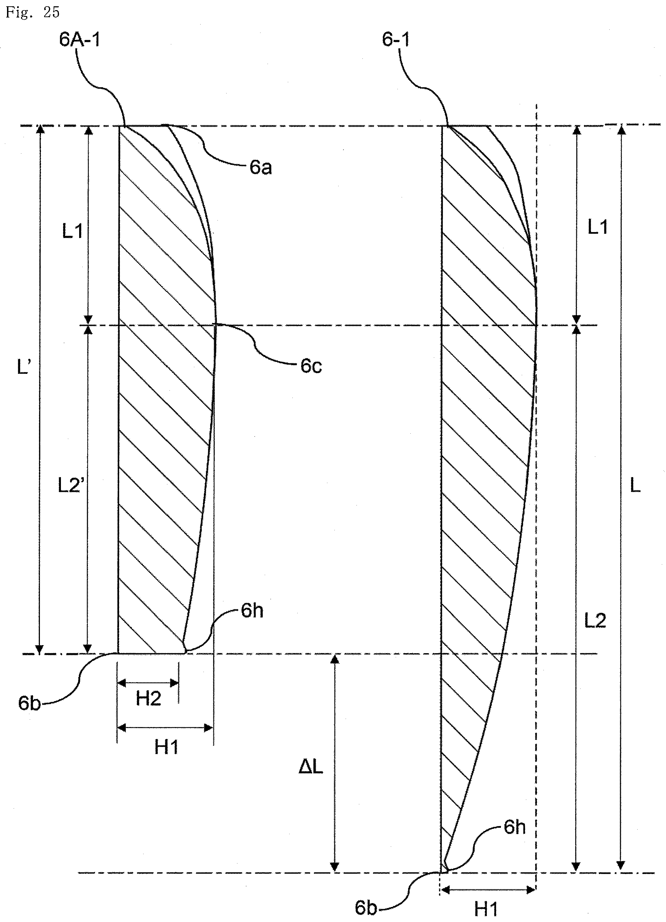

Fig. 25 is a comparative diagram of the protruding member 6A-1 according to Embodiment 2 and the protruding member 6-1 according to Embodiment 1. Based on Fig. 25, it can be said that the protruding member 6A-1 is shaped by cutting a portion around the second end 6b of the protruding member 6-1 in a direction orthogonal to the central axis C3 of the vertical pipe 3A. However, in the protruding member 6A-1, as with the protruding member 6-1, the projection 6h is present between the top 6c and the second end 6b. The height of the protruding member 6A-1 monotonically decreases from the top 6c toward the projection 6h. If the length of the protruding member 6A-1 is extended downstream, the protruding member 6A-1 would virtually have a portion where its height becomes zero. The point where the height of the protruding member 6A-1 becomes zero may correspond to the second end 6b of the protruding member 6-1.

The protruding member 6A-1 can have a smaller dimension in the direction of the central axis C3 of the vertical pipe 3A than the protruding member 6-1. In particular, the protruding member 6A-1 has a shape in which a portion around the second end 6b of the protruding member 6-1, which protrudes outward from the straight pipe 32, is cut off. That is, when the protruding member 6-1 is disposed inside the straight pipe 32, the portion around the second end 6b of the protruding member 6-1 protrudes outward from the second end of the straight pipe 32. Since the second end 6b of the protruding member 6-1 is thin, it tends to be easily damaged. Therefore, when the protruding member 6-1 is disposed inside the straight pipe 32, there is a possibility that the protruding member 6-1 may be damaged during transportation or the like. In contrast, since the entire protruding member 6A-1 is contained within the straight pipe 32, the possibility of damage to the protruding member 6A-1 can be reduced.

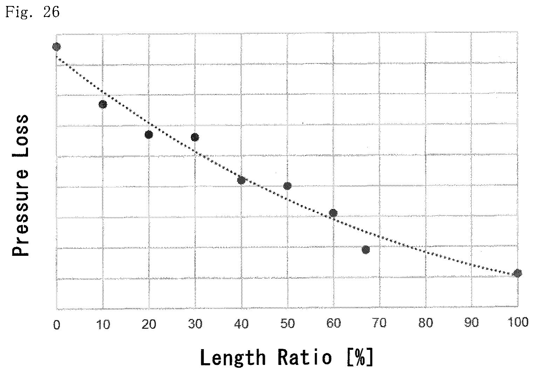

The protruding member 6A-1 has the advantage that its dimension in the direction of the central axis C3 of the vertical pipe 3A can be made smaller and that damage can be prevented, as compared to the protruding member 6-1. Such a shape change between the protruding member 6A-1 and the protruding member 6-1 may also cause a change in pressure loss. Therefore, the change in pressure loss due to the difference in shape between the protruding member 6-1 and the protruding member 6A-1 was evaluated. Fig. 26 is a graph showing the change in pressure loss caused by the protruding member of Embodiment 2 relative to the protruding member of Embodiment 1.

In the graph of Fig. 26, the vertical axis represents the pressure loss in the piping member. The horizontal axis represents the length ratio [%]. The length ratio [%] is the percentage of the distance from the top 6c to the second end 6b of the protruding member 6A-1 relative to the distance from the top 6c to the second end 6b of the protruding member 6-1.

In Figs. 19 and 25, the distance between the first end 6A and the second end 6b of the protruding member 6A-1 in the direction of the central axis C3 of the vertical pipe 3A is denoted by "L'." The distance between the top 6c and the second end 6b of the protruding member 6A-1 in the direction of the central axis C3 of the vertical pipe 3A is denoted by "L2'." In Fig. 25, the distance between the second end 6b of the protruding member 6A-1 and the second end 6b of the protruding member 6-1, in the direction of the central axis C3 of the vertical pipe 3A, is denoted by "$\Delta$L." L2 = L2' + $\Delta$L, and L = L' + $\Delta$L. The length ratio [%] is determined by L2'/L2 $\times$ 100.

In Fig. 26, the length ratio of 100% indicates that the shape of the protruding member 6A-1 is the same as that of the protruding member 6-1. The length ratio of 0% indicates that the protruding member 6A-1 corresponds to the shape from the first end 6A to the top 6c. The height of the protruding member 6A-1 monotonically decreases from the top 6c toward the second end 6b. Therefore, as the length ratio decreases, the height of the protruding member 6A-1 at the second end 6b increases. As can be seen from Fig. 26, as the length ratio decreases, the effect of reducing pressure loss also decreases. However, the relationship between the length ratio and pressure loss is not linear; as the length ratio decreases, the pressure loss increases exponentially. That is, the increase in pressure loss due to a decrease in the length ratio is relatively moderate. Thus, the decrease in the effect of reducing pressure loss resulting from a reduction in the length ratio is limited. In consideration of these points, L2' is set to satisfy the following condition. Specifically, if the height of the protruding member 6A-1 at the top 6c is denoted by "H1" and the height at the second end 6b is denoted by "H2", then $0.05H1 \leq H2 \leq 0.90H1$. As a result, it is possible to achieve downsizing and to improve flow rate. In particular, the length of the protruding member 6A-1 can be made shorter than that of the protruding member 6-1, thus allowing for downsizing. Furthermore, since the protruding member 6A-1 has fewer thin sections at its downstream region compared to the protruding member 6-1, the possibility of damage to the protruding member 6A-1 can be reduced.

As described in Embodiment 1, for the protruding member 6-1, it is preferable that $0.5d \leq L \leq 5.0d$. This enables further reduction of pressure loss caused by separation at the downstream side of the bend 5-1. Therefore, downsizing is made possible while improving flow rate. Here, as described above, L = L1 + L2' + $\Delta$L. If the decrease in height per unit length from the top 6c to the second end 6b of the protruding member 6-1 is constant, then (H1 - H2)/L2' = H2/$\Delta$L. That is, $\Delta$L = H2/(H1 - H2) $\times$ L2'. Therefore, the formula of $0.5d \leq L \leq 5.0d$ can be rewritten using L1 and L2' as $0.5d \leq L1 + H1/(H1 - H2) \times L2' \leq 5.0d$. Accordingly, in the protruding member 6A-1, if the inner diameter of the straight pipe 32 is denoted by "d", the distance between the first end 6A and the top 6c in the direction of the central axis C3 of the straight pipe 32 is denoted by "L1", and the distance between the top 6c and the second end 6b is denoted by "L2'", it is preferable that $0.5d \leq L1 + H1/(H1$

- H2) $\times$ L2' $\leq$ 5.0d.

[1.2.2ADVANTAGESOUS EFFECTS ]

The aforementioned protruding member 6A-1, 6A-2 includes the end surface 68 at the second end 6b, the end surface 68 intersecting the central axis C3, C4 of the straight pipe 32, 34. This configuration enables improving the flow rate while downsizing. This configuration can reduce the possibility of damage at the second end 6b of the protruding member 6A-1, 6A-2.

In the protruding member 6A-1, 6A-2, when the height at the top 6c is denoted by H1 and the height at the second end 6b is denoted by H2, 0.05H1 $\leq$ H2 $\leq$ 0.90H1. This configuration enables improving the flow rate while downsizing.

In the protruding member 6A-1, 6A-2, when the inner diameter of the straight pipe 32, 42 is denoted by "d", the distance between the first end 6a and the top 6c in the direction of the center axis C3, C4 of the straight pipe 32, 42 is denoted by "L1", and the distance between the top 6c and the second end 6b in the direction of the center axis C3, C4 of the straight pipe 32, 42 is denoted by "L2'", 0.5d $\leq$ L1 + H1/(H1 - H2) $\times$ L2' $\leq$ 5.0d. This configuration enables improving the flow rate while downsizing.

[2. VARIATIONS]

Embodiments of the present disclosure are not limited to the embodiments described above. The above embodiments may be variously modified in accordance with design and other factors, provided that the objects of the present disclosure can be achieved. Hereinafter, variations of the above embodiments will be enumerated. The variations described below may be applied in appropriate combinations.

It is noted that, in the following description, reference will be made to the reference signs used in Embodiment 1, even though the following variations may be applicable to any of Embodiments 1 to 2. This is merely for the purpose of simplifying the description and is not intended to exclude application to Embodiment 2.

In one variation, the position of the projection 6h is not limited to the second end 6b, and may be positioned anywhere between the top 6c and the second end 6b. In one variation, the protruding member 6-1 may include a plurality of projections 6h between the top 6c and the second end 6b. The projection 6h may be formed integrally with the protruding member 6-1, or may be separately formed and attached thereto.

In one variation, in the protruding member 6-1, the first side surface 62 and the second side surface 63 may have an asymmetric shape with respect to the center line of the protruding member 6-1 along the central axis C3 of the vertical pipe 3. The shapes of the first side surface 62 and the second side surface 63 may be individually set according to the installation environment of the piping system 1 or the piping member 10, and need not necessarily be symmetric with respect to the center line of the protruding member 6-1 along the central axis C3 of the vertical pipe 3.

In one variation, the protruding member 6-1 does not necessarily need to have the contact end surface 66.

In one variation, the shapes, the number, and arrangement of the protruded parts 67 of the protruding member 6-1 may be appropriately changed according to the shape, the number, and arrangement of the recesses 3c of the vertical pipe 3. The recesses 3c may be holes rather than cutouts. The position of the recesses 3c is not limited to the edge at the upstream end 3. Preferably, the protruded parts 67 and recesses 3c are provided to facilitate positioning of the protruding member 6-1 relative to the vertical pipe 3. However, the protruding member 6-1 does not necessarily need to have the protruded parts 67.

In one variation, the protruding member 6-1 may not be a separate member from the vertical pipe 3, but may be formed integrally with the vertical pipe 3. This is equivalent to the inner peripheral surface 30a of the vertical pipe 3 including the main surface 61, as well as the first and second side surfaces 62, 63 of the protruding member 6-1.

In one variation, the protruding members 6-1, 6-2 do not necessarily need to have the same configuration or structure. For example, in at least one of the protruding members 6-1, 6-2, one or more of the following conditions may be satisfied: 0.1L $\leq$ L1 $\leq$ 0.5L, A1/A $\leq$ 0.4, or 0.5d $\leq$ L $\leq$ 5.0d.

In one variation, the protruding members 6-1, 6-2 do not necessarily have to have the same shape and dimensions, and may have different shapes and dimensions. That is, the shapes and dimensions of the protruding members 6-1, 6-2 may be appropriately set according to the locations where the protruding members 6-1, 6-2 are disposed.

In one variation, the protruding member 6-1 does not necessarily need to be completely contained within the vertical pipe 3. In particular, the second end 6b of the protruding member 6-1 may protrude outward from the vertical pipe 3.

In one variation, the material of the protruding member 6-1 is not necessarily limited to unplasticized poly(vinyl chloride). The material of the protruding member 6-1 may be determined according to the requirements of the piping system 1, and may, for example, be a synthetic resin such as polyethylene. Further, the material of the protruding member 6-1 may be a metal, rather than a synthetic resin.

In one variation, the shape and size of part or all of the piping system 1 may differ from those described in the above embodiment. For example, unlike the above embodiment, in the piping system 1, the shapes of the bends 5-1, 5-2, the vertical pipe 3, and the horizontal pipe 4, may be polygonal rather than circular.

In one variation, the bends 5-1, 5-2 are not limited to the 90° elbow (so-called DL) as specified in JIS K6739. The bends 5-1, 5-2 may be a 90° long radius elbow (so-called LL), or a 45° elbow (so-called 45L) as specified in JIS K6739. The dimensions of the bends 5-1, 5-2 are not necessarily required to conform to the standards of JIS K6739 "Unplasticized poly(vinyl chloride) (PVC-U) pipe fittings for drain."

In one variation, the piping system 1 does not necessarily need to include the eaves gutter 2. For example, where the building 11 has a structure including a water inlet such as a balcony, the bend 5-2 of the piping system 1 may be connected to the water inlet of the building 11.

In one variation, the piping system 1 may include only one of the protruding members 6-1, 6-2. Accordingly, the piping system 1 may include the vertical pipe 3 fixed to the wall surface 11b of the building 11, the horizontal pipe 4 positioned between the water inlet 2b from the building 11 and the vertical pipe 3, the first bend 5-1 positioned between the horizontal pipe 4 and the vertical pipe 3, the second bend 5-2 positioned between the water inlet 2b and the horizontal pipe 4, and at least one protruding member 6-1, 6-2. The at least one protruding member 6-1, 6-2 is disposed inside at least portion of the horizontal pipe 4 or the vertical pipe 3 as the straight pipe.

In one variation, the drain 8 may have a structure that is generally considered not to contribute to or promote the occurrence of a siphon phenomenon. In one variation, the piping system 1 does not necessarily need to be provided with the drain 8. The drain 8 is not an essential component in the piping system 1 and may be provided as appropriate according to the installation environment of the piping system 1.

In one variation, the piping system 1 does not necessarily need to be provided with the vertical pipe 7. The vertical pipe 7 is not an essential component in the piping system 1 and may be provided as appropriate according to the installation environment of the piping system 1.

In one variation, the piping system 1 is not limited to a rain gutter system, which is a type of drainage system, and may also be another drainage system such as a sewage system, or may be applied to a water supply system such as a potable water supply. In other words, the protruding member or piping member may be used in a system for supplying or draining water.

[3. ASPECTS]

As apparent from the above embodiments and variations, the present disclosure includes the following aspects.

[ASPECT 1]

A protruding member disposed inside a straight pipe disposed on a downstream side of a bend for changing a direction of a flow channel to partially reduce a flow channel cross-sectional area of the straight pipe, comprising:

a top positioned between a first end facing upstream and a second end facing downstream to minimize the flow channel cross-sectional area of the straight pipe; and
a projection that protrudes from a region between the top and the second end toward a center of the straight pipe viewed along a direction of a center axis of the straight pipe but does not protrude beyond the top.

[ASPECT 2]

The protruding member of aspect 1, wherein
the projection is positioned on the second end.

[ASPECT 3]

The protruding member of aspect 1, wherein
when a dimension of the projection a viewed along the direction of the central axis of the straight pipe is denoted by "a" and an inner diameter of the straight pipe is denoted by "d", $0.01d \leq a \leq 0.05d$.

[ASPECT 4]

The protruding member of aspect 3, wherein
when a radius of curvature of a corner of the projection as viewed along a width direction of the protruding member is denoted by "r", $r \leq a$.

[ASPECT 5]

The protruding member of any one of aspects 1 to 3, wherein
when a dimension of the protrusion in a direction of a central axis of the straight pipe is denoted by "b" and an inner diameter of the straight pipe is denoted by "d", $0.01d \leq b \leq 0.05d$.

[ASPECT 6]

The protruding member of aspect 5, wherein
when a radius of curvature of a corner of the projection as viewed along a width direction of the protruding member is denoted by "r", $r \leq b$.

[ASPECT 7]

The protruding member of any one of aspects 1 to 6, wherein

when a distance between the first end and the second end in a direction of a center axis of the straight pipe is denoted by "L", and
a distance between the first end and the top in the direction of the center axis of the straight pipe is denoted by "L1",

$$0.1L \leq L1 \leq 0.5L.$$

[ASPECT 8]

The protruding member of any one of aspects 1 to 7, wherein

when a maximum flow channel cross-sectional area of the straight pipe is denoted by "A", and
a cross-sectional area at the top of the protruding member is denoted by "A1",

$$A1/A \leq 0.4.$$

[ASPECT 9]

The protruding member of any one of aspects 1 to 8, wherein
the second end has a tapered shape as viewed along a width direction of the protruding member.

[ASPECT 10]

The protruding member of aspect 9, wherein

when an inner diameter of the straight pipe is denoted by "d", and
a distance between the first end and the second end in a direction of a center axis of the straight pipe is denoted by "L",

$$0.5d \leq L \leq 5.0d.$$

[ASPECT 11]

The protruding member of any one of aspects 1 to 8, comprising an end surface at the second end, the end surface intersecting a central axis of the straight pipe.

[ASPECT 12]

The protruding member of aspect 11, wherein
when a height at the top is denoted by H1 and a height at the second end is denoted by H2,

$$0.05H1 \leq H2 \leq 0.90H1.$$

[ASPECT 13]

The protruding member of aspect 12, wherein

when an inner diameter of the straight pipe is denoted by "d",
a distance between the first end and the top in a direction of a center axis of the straight pipe is denoted by "L1", and
a distance between the top and the second end in the direction of the center axis of the straight pipe is denoted by "L2'",

$$0.5d \leq L1 + H1/(H1 - H2) \times L2' \leq 5.0d.$$

[ASPECT 14]

A piping member comprising:

the protruding member of any one of aspects 1 to 13; and
the straight pipe.

[ASPECT 15]

A piping system comprising:

a vertical pipe fixed to a wall surface of a building;
a horizontal pipe positioned between a water inlet for rainwater from the building and the vertical pipe;
a first bend positioned between the horizontal pipe and the vertical pipe;
a second bend positioned between the water inlet and the horizontal pipe; and
at least one protruding member of any one of aspects 1 to 13,
the at least one protruding member being disposed inside at least portion of the horizontal pipe or the vertical pipe as
the straight pipe.

Aspects 2 to 13 are optional and not essential.

INDUSTRIAL APPLICABILITY

The present disclosure can be applied to protruding members, piping members, and piping systems. In particular, the present disclosure is applicable to a protruding member for changing a flow channel cross-sectional area, a piping member including the protruding member, and a piping system including the piping member.

REFERENCE SIGNS LIST

| 1, 1A | Piping System |
|---|---|
| 2b | Water inlet |
| 3, 3A | Vertical Pipe (Straight Pipe) |
| 32 | Straight Pipe |
| 4, 4A | Horizontal Pipe (Straight Pipe) |
| 42 | Straight Pipe |
| 5-1 | Bend (First Bend) |
| 5-2 | Bend (Second Bend) |
| 6-1, 6-2, 6A-1, 6A-2 | Protruding Member |
| 6a | First End |
| 6b | Second End |
| 6c | Top |
| 6h | Projection |
| 68 | End Surface |
| 10-1, 10-2, 10A-1, 10A-2 | Piping Member |
| C3, C4 | Central Axis |

**Claims**

1. A protruding member disposed inside a straight pipe disposed on a downstream side of a bend for changing a direction of a flow channel to partially reduce a flow channel cross-sectional area of the straight pipe, comprising:

   a top positioned between a first end facing upstream and a second end facing downstream to minimize the flow channel cross-sectional area of the straight pipe; and
   a projection that protrudes from a region between the top and the second end toward a center of the straight pipe viewed along a direction of a center axis of the straight pipe but does not protrude beyond the top.

2. The protruding member of claim 1, wherein
   the projection is positioned on the second end.

3. The protruding member of claim 1, wherein
   when a dimension of the projection a viewed along the direction of the central axis of the straight pipe is denoted by "a" and an inner diameter of the straight pipe is denoted by "d", $0.01d \leq a \leq 0.05d$.

4. The protruding member of claim 3, wherein
   when a radius of curvature of a corner of the projection as viewed along a width direction of the protruding member is denoted by "r", $r \leq a$.

5. The protruding member of claim 1, wherein
   when a dimension of the protrusion in a direction of a central axis of the straight pipe is denoted by "b" and an inner diameter of the straight pipe is denoted by "d", $0.01d \leq b \leq 0.05d$.

6. The protruding member of claim 5, wherein
   when a radius of curvature of a corner of the projection as viewed along a width direction of the protruding member is denoted by "r", $r \leq b$.

7. The protruding member of claim 1, wherein

   when a distance between the first end and the second end in a direction of a center axis of the straight pipe is denoted by "L", and
   a distance between the first end and the top in the direction of the center axis of the straight pipe is denoted by "L1",

$$0.1L \leq L1 \leq 0.5L.$$

8. The protruding member of claim 1, wherein

   when a maximum flow channel cross-sectional area of the straight pipe is denoted by "A", and
   a cross-sectional area at the top of the protruding member is denoted by "A1",

$$A1/A \leq 0.4.$$

9. The protruding member of claim 1, wherein
   the second end has a tapered shape as viewed along a width direction of the protruding member.

10. The protruding member of claim 9, wherein

    when an inner diameter of the straight pipe is denoted by "d", and
    a distance between the first end and the second end in a direction of a center axis of the straight pipe is denoted by "L",

$$0.5d \leq L \leq 5.0d.$$

11. The protruding member of claim 1, comprising an end surface at the second end, the end surface intersecting a central axis of the straight pipe.

12. The protruding member of claim 11, wherein
   when a height at the top is denoted by H1 and a height at the second end is denoted by H2,

$$0.05H1 \leq H2 \leq 0.90H1.$$

13. The protruding member of claim 12, wherein

   when an inner diameter of the straight pipe is denoted by "d",
   a distance between the first end and the top in a direction of a center axis of the straight pipe is denoted by "L1", and
   a distance between the top and the second end in the direction of the center axis of the straight pipe is denoted by "L2'",

$$0.5d \leq L1 + H1/(H1 - H2) \times L2' \leq 5.0d.$$

14. A piping member comprising:

   the protruding member of any one of claims 1 to 13; and
   the straight pipe.

15. A piping system comprising:

   a vertical pipe fixed to a wall surface of a building;
   a horizontal pipe positioned between a water inlet for rainwater from the building and the vertical pipe;
   a first bend positioned between the horizontal pipe and the vertical pipe;
   a second bend positioned between the water inlet and the horizontal pipe; and
   at least one protruding member of any one of claims 1 to 13,
   the at least one protruding member being disposed inside at least portion of the horizontal pipe or the vertical pipe
   as the straight pipe.

Fig. 1

Fig. 2

Fig. 3

Fig. 4

Fig. 5

Fig. 6

Fig. 7

Fig. 8

<u>10-1</u>

Fig. 9

<u>10-1</u>

Fig. 10

10-1

Fig. 11

10-1

Fig. 12

10-1

Fig. 13

10-1

Fig. 14

10-1

Fig. 15

EP 4 696 920 A1

Fig. 16

Fig. 17

Fig. 18

Fig. 19

Fig. 20

Fig. 21

Fig. 22

Fig. 23

10A-1

3A

32

33

6A-1

6c

61

64

65

62

66

3c

67

60

6a

63

Fig. 24

10A-1

Fig. 25

6A-1

6-1

6a

L1

6c

L1

L'

L2'

L

6h

L2

6b

H2

H1

ΔL

6h

6b

H1

Fig. 26

## INTERNATIONAL SEARCH REPORT

| International application No. |
|---|
| **PCT/JP2024/001851** |

**A. CLASSIFICATION OF SUBJECT MATTER**

*F16L 55/00*(2006.01)i; *E04D 13/08*(2006.01)i
FI: F16L55/00 G; E04D13/08 B

According to International Patent Classification (IPC) or to both national classification and IPC

**B. FIELDS SEARCHED**

Minimum documentation searched (classification system followed by classification symbols)

F16L55/00; E04D13/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-068062 A (NISHIMURA, Tokio) 18 April 2013 (2013-04-18) entire text, all drawings | 1-15 |
| A | JP 2013-036235 A (SEKISUI CHEMICAL CO., LTD.) 21 February 2013 (2013-02-21) entire text, all drawings | 1-15 |
| A | JP 2003-342984 A (SEKISUI CHEMICAL CO., LTD.) 03 December 2003 (2003-12-03) entire text, all drawings | 1-15 |
| A | Microfilm of the specification and drawings annexed to the request of Japanese Utility Model Application No. 074241/1984 (Laid-open No. 185795/1985) (SANOH INDUSTRIAL CO., LTD.) 09 December 1985 (1985-12-09), entire text, all drawings | 1-15 |
| A | JP 08-209762 A (KOJIMA, Noriatsu) 13 August 1996 (1996-08-13) entire text, all drawings | 1-15 |
| A | JP 2018-094459 A (USUI CO., LTD.) 21 June 2018 (2018-06-21) entire text, all drawings | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 February 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/001851**

### C.    DOCUMENTS CONSIDERED TO BE RELEVANT

| Category* | Citation of document, with indication, where appropriate, of the relevant passages | Relevant to claim No. |
|---|---|---|
| A | JP 2014-024042 A (MITSUBISHI ELECTRIC CORPORATION) 06 February 2014 (2014-02-06)<br>entire text, all drawings | 1-15 |
| A | JP 2008-132284 A (SHARP KABUSHIKI KAISHA) 12 June 2008 (2008-06-12)<br>entire text, all drawings | 1-15 |

Form PCT/ISA/210 (second sheet) (July 2022)

INTERNATIONAL SEARCH REPORT
Information on patent family members

International application No.

**PCT/JP2024/001851**

| Patent document cited in search report | | | Publication date (day/month/year) | Patent family member(s) | Publication date (day/month/year) |
|---|---|---|---|---|---|
| JP | 2013-068062 | A | 18 April 2013 | (Family: none) | |
| JP | 2013-036235 | A | 21 February 2013 | (Family: none) | |
| JP | 2003-342984 | A | 03 December 2003 | (Family: none) | |
| JP | 60-185795 | U1 | 09 December 1985 | (Family: none) | |
| JP | 08-209762 | A | 13 August 1996 | (Family: none) | |
| JP | 2018-094459 | A | 21 June 2018 | US 2020/0386195 A1 entire text, all drawings EP 3552685 A1 CN 109982767 A KR 10-2019-0089905 A | |
| JP | 2014-024042 | A | 06 February 2014 | (Family: none) | |
| JP | 2008-132284 | A | 12 June 2008 | EP 2087827 A1 entire text, all drawings CN 101528102 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019120068 A